# EUROPEAN PATENT APPLICATION

(11) **EP 4 461 495 A1**
(43) Date of publication of application: **13.11.2024**
(21) Application number: 22918890.9
(22) Date of filing: 27.12.2022
(51) Int. Cl.: B29B 11/16, D03D 1/00, D03D 15/292, D03D 15/56, B29K 105/10

(54) **COMPOSITE MATERIAL AND METHOD OF MANUFACTURING THE SAME**

(30) Priority: 05.01.2022 JP 2022000731
(71) Applicant: Kuraray Co., Ltd., Kurashiki-shi, Okayama 710-0801 (JP)
(72) Inventor: KUSUDO, Kazumasa, Okayama-shi, Okayama 702-8601 (JP); ASO, Yoshifumi, Okayama-shi, Okayama 702-8601 (JP); KATSUYA, Satoshi, Okayama-shi, Okayama 702-8601 (JP)
(74) Representative: Müller-Boré & Partner Patentanwälte PartG mbB
(86) International application number: PCT/JP2022/048289
(87) International publication number: WO 2023/132307

(57) **Abstract**

Provided is a composite material that is useful as a reinforcement, and the like. The composite material at least includes a woven fabric which contains weaving yarns being fibers each having a tensile elastic modulus of 20 GPa or higher, and a thermoplastic elastomer resin. The thermoplastic elastomer resin penetrates through openings of the woven fabric from one surface of the woven fabric, and is exposed at another surface.

## Description

### CROSS REFERENCE TO THE RELATED APPLICATION

This application is based on and claims Convention priority to Japanese patent application No. 2022-000731, filed January 5, 2022, the entire disclosure of which is herein incorporated by reference as a part of this application.

### FIELD OF THE INVENTION

The present invention relates to a composite material that at least includes a woven fabric made of high modulus fibers and a thermoplastic elastomer resin.

### BACKGROUND OF THE INVENTION

In recent years, the technology in the field of microelectronics has remarkably progressed, and mobile electronic devices and the like have been strongly required to have miniaturized sizes and reduced weights. Furthermore, components of the devices are required to have both high strength and thin-sheet-like thickness since members of the components need to be prevented from being largely deformed and thus coming into contact with other internal components or being damaged when a load is applied from outside.

For example, Patent Document 1 (WO 2020/085246) discloses a composite sheet including a woven fabric formed of liquid crystal polyester fibers in which one surface or both surfaces of the woven fabric are coated with a coating material containing a thermoplastic resin, wherein a tensile strength of the composite sheet in a warp direction of the woven fabric is 300 N/cm or more, and a ratio of a mass of the thermoplastic resin to a mass of the woven fabric is 5 to 25 mass%, as a composite sheet having light weight and high strength as well as excellent flexibility and high bending resistance.

Furthermore, Patent Document 2 (JP Laid-open Patent Publication No. 2017-205917) discloses a composite sheet material including a knitted or woven sheet with interstices, and thermoplastic elastomer layers that cover the front and back sides of the knitted or woven sheet, in which the thermoplastic elastomer layers on the front and the back sides are connected to each other through the interstices. In the composite sheet material, the knitted or woven sheet is formed of polymer yarns having a melting point or a softening point of 200°C or higher and having a tensile strength of 3.8 to 20.3 cN/dtex, and has an opening rate of the interstices of less than 50%, and the thermoplastic elastomer layer has a surface hardness according to JIS A of 40 or more and less than 85.

### RELATED ART DOCUMENT

### PATENT DOCUMENT

[Patent Document 1] WO 2020/085246
[Patent Document 2] JP Laid-open Patent Publication No. 20I7-205917

### SUMMARY OF THE INVENTION

However, Patent Document 1 merely describes that a liquid coating material is impregnated into or applied to the woven fabric formed of liquid crystal polyester fibers in the composite sheet, and the fiber surface of the woven fabric is merely coated thinly with the coating material. In such a case, the coating material cannot exhibit a sufficient anchor effect for the woven fabric. Furthermore, although Patent Document 1 describes that the woven fabric is coated with a resin, and the composite sheet is adhered to a further member through a hotmelt adhesive by utilizing adhesiveness between the coating material and the hotmelt adhesive, Patent Document 1 does not describe that the composite sheet is adhered directly to a further member.

In the composite sheet material disclosed in Patent Document 2, the knitted or woven sheet is held between the thermoplastic elastomer layers and integrated therewith by using a metal roll, and, since the thermoplastic elastomer layers are disposed on the front and the back sides of the woven fabric, the thermoplastic elastomer layers cannot penetrate through an opening from one surface of the woven fabric to the other surface thereof. As a result, an anchor effect cannot be expected to be exhibited by penetration of thermoplastic elastomer.

Therefore, an object of the present invention is to provide a composite material that allows enhancement of integration of a woven fabric made of high modulus fibers and a thermoplastic elastomer resin (and a further member disposed as necessary).

As a result of intensive research and studies to achieve the above object, the inventors of the present invention have focused on the influence exerted on a thermoplastic elastomer resin by openings of a woven fabric when the woven fabric made of high modulus fibers and a thermoplastic elastomer resin sheet form a composite. The inventors have found that, for example, (i) in a case where the high modulus fibers are multifilaments, when the thermoplastic elastomer resin is pressed out toward the openings of the woven fabric, passes through the openings, is exposed at the other surface, and is spread at the other surface over a predetermined area, an anchor effect is exhibited by the thermoplastic elastomer resin spread at the other surface; (ii) in a case where the high modulus fibers are monofilaments, when the thermoplastic elastomer resin is pressed out toward the openings of the woven fabric, passes through the openings, and is exposed at the other surface, the monofilaments in the woven fabric are efficiently entangled, and an anchor effect is exhibited by the thermoplastic elastomer resin, by adjusting the weaving density and the opening rate of the woven fabric; and (iii) an anchor effect can be exhibited by the thermoplastic elastomer resin in these composite materials, so that integration of the woven fabric made of the high modulus fibers and the thermoplastic elastomer resin (and a further member disposed as necessary) can be enhanced. Based on these findings, the inventors have completed the present invention.

That is, the present invention may include the following aspects.

### Aspect 1

A composite material at least including:
a woven fabric which contains weaving yarns being multifilaments each having a tensile elastic modulus of 20 GPa or higher (preferably 30 GPa or higher); and
a thermoplastic elastomer resin,
wherein the thermoplastic elastomer resin penetrates through openings of the woven fabric from one surface of the woven fabric, and is exposed at another surface, and
an exposed area rate of the thermoplastic elastomer resin is 10% or higher (preferably 15 to 100%, more preferably 18 to 99%, even more preferably 25 to 95%, and still more preferably 25 to 85%) at the other surface.

### Aspect 2

The composite material according to aspect 1, wherein the woven fabric has an opening area per square inch of 3 mm²/inch² or more (preferably 10 mm²/inch² or more, more preferably 12 mm²/inch² or more, even more preferably 13 mm²/inch² or more, and still more preferably 14 mm²/inch² or more).

### Aspect 3

A composite material at least including:
a woven fabric which contains weaving yarns being monofilaments each having a tensile elastic modulus of 20 GPa or higher (preferably 30 GPa or higher); and
a thermoplastic elastomer resin,
wherein the woven fabric has a weaving density of 110 yarns/inch or more (preferably 130 yarns/inch or more) and an opening rate of 70% or less (for example, 20 to 70%, preferably 30% to 68%, and more preferably 40% to 65%), and
the thermoplastic elastomer resin penetrates through openings of the woven fabric from one surface of the woven fabric, and is exposed at another surface.

### Aspect 4

The composite material according to aspect 3, wherein the woven fabric has an opening area per square inch of 200 mm²/inch² or more (preferably 220 mm²/inch² or more, and more preferably 250 mm²/inch² or more).

### Aspect 5

The composite material according to any one of aspects 1 to 4, wherein a proportion of the thermoplastic elastomer resin introduced into the woven fabric is 20 mass% or more (for example, more than 25 mass%, preferably 30 mass% or more, more preferably 60 mass% or more, and even more preferably 70 mass% or more).

### Aspect 6

The composite material according to any one of aspects 1 to 5, wherein the weaving yarns each having the tensile elastic modulus of 20 GPa or higher are thermotropic liquid crystal wholly aromatic polyester fibers.

### Aspect 7

The composite material according to any one of aspects 1 to 6, wherein the weaving yarns each having the tensile elastic modulus of 20 GPa or higher are composite fibers.

### Aspect 8

The composite material according to any one of aspects 1 to 7, wherein each of the openings has a length / width ratio of from 0.5 to 2 (preferably from 0.6 to 1.8).

### Aspect 9

The composite material according to any one of aspects 1 to 8, wherein the thermoplastic elastomer resin penetrates through the openings of the woven fabric from the one surface of the woven fabric, and is spread from the openings to surrounding area and exposed at the other surface, and the openings have an average opening area of 0.0010 mm² or more (preferably 0.0020 mm² or more).

### Aspect 10

The composite material according to any one of aspects 1 to 9, including a further member, wherein the further member and the woven fabric are bonded with the thermoplastic elastomer resin.

### Aspect 11

The composite material according to any one of aspects 1 to 10, wherein the composite material is used as a reinforcement.

### Aspect 12

A method for manufacturing the composite material as recited in any one of aspects 1 to 11, including:
stacking a woven fabric, a thermoplastic elastomer resin sheet, and, as necessary, a further member in order, the woven fabric having openings and containing weaving yarns being fibers each having a tensile elastic modulus of 20 GPa or higher; and
softening the thermoplastic elastomer resin sheet while heating to press out a thermoplastic elastomer resin of the thermoplastic elastomer resin sheet from one surface of the woven fabric into the openings of the woven fabric.

### Aspect 13

The method according to aspect 12, wherein the thermoplastic elastomer resin sheet has an MFR of 0.3 to 80 g/10 min (preferably 0.5 to 60 g/10 min).

### Aspect 14

The method according to aspect 12 or 13, wherein the thermoplastic elastomer resin sheet has a thickness(/sheet) of 10 to 200 µm (preferably 20 to 190 µm, and more preferably 30 to 180 µm).

In the present invention, the "exposed area rate" refers to a proportion of the thermoplastic elastomer resin that penetrates from the openings at the one surface of the woven fabric and is exposed at the other surface, to a predetermined area of the woven fabric.

According to the present invention, in the composite material, the high modulus fibers are used for the weaving yarns of the woven fabric, the thermoplastic elastomer resin sheet is pressed out from one surface of the woven fabric, and the resin penetrates from the openings of the woven fabric and is exposed at the other surface of the woven fabric, whereby the anchor effect can be exhibited by the resin. Therefore, integration of the woven fabric and the thermoplastic elastomer resin (and a further member disposed as necessary) can be enhanced.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims.
Fig. 1A is a schematic plan view of a woven fabric used for a composite material according to one embodiment of the present invention;
Fig. 1B is a schematic bottom view of the composite material in which the woven fabric shown in Fig. 1A is used;
Fig. 2A is a schematic exploded cross-sectional view for illustrating a step of causing a thermoplastic elastomer resin to penetrate through a woven fabric when a composite material according to one embodiment of the present invention is produced;
Fig. 2B is a schematic cross-sectional view for illustrating a state where the thermoplastic elastomer resin penetrates through an opening of the woven fabric in the composite material according to one embodiment of the present invention;
Fig. 3A is a schematic exploded cross-sectional view for illustrating a step of causing a thermoplastic elastomer resin to penetrate through a woven fabric when a composite material according to another embodiment of the present invention is produced;
Fig. 3B is a schematic cross-sectional view for illustrating a state where the thermoplastic elastomer resin penetrates through an opening of the woven fabric in the composite material according to another embodiment of the present invention;
Fig. 4 is a schematic plan view of a woven fabric used for a composite material according to another embodiment of the present invention;
Fig. 5A is a schematic exploded cross-sectional view for illustrating a step of causing a thermoplastic elastomer resin to penetrate through a woven fabric when a composite material according to another embodiment of the present invention is produced;
Fig. 5B is a schematic cross-sectional view for illustrating a state where the thermoplastic elastomer resin penetrates through an opening of the woven fabric in the composite material according to another embodiment of the present invention;
Fig. 6A is a schematic exploded cross-sectional view for illustrating a step of causing a thermoplastic elastomer resin to penetrate through a woven fabric when a composite material according to another embodiment of the present invention is produced;
Fig. 6B is a schematic cross-sectional view for illustrating a state where the thermoplastic elastomer resin penetrates through an opening of the woven fabric in the composite material according to another embodiment of the present invention;

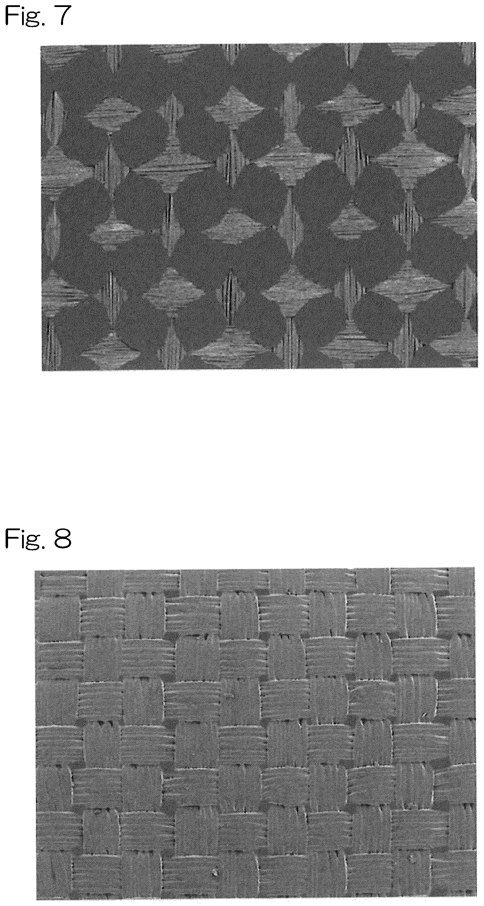

Fig. 7 shows a photograph representing a state where an exposed area of the composite material according to Example 1 of the present invention is binarized; and
Fig. 8 shows a photograph representing a state where an exposed area of the composite material according to Comparative Example 1 is binarized.

### DESCRIPTION OF EMBODIMENTS

A composite material according to one embodiment of the present invention is a composite material that at least includes a woven fabric which contains weaving yarns being fibers each having a tensile elastic modulus of 20 GPa or higher, and a thermoplastic elastomer resin. In the composite material, the thermoplastic elastomer resin penetrates through openings of the woven fabric from one surface of the woven fabric, and the thermoplastic elastomer resin is spread from the openings to surrounding area and is exposed at the other surface.

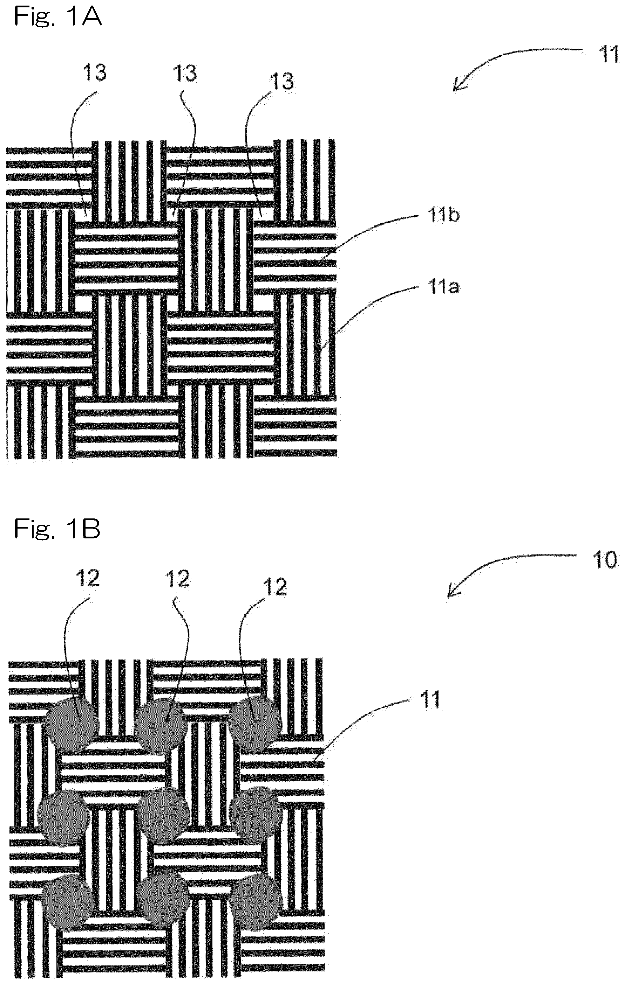

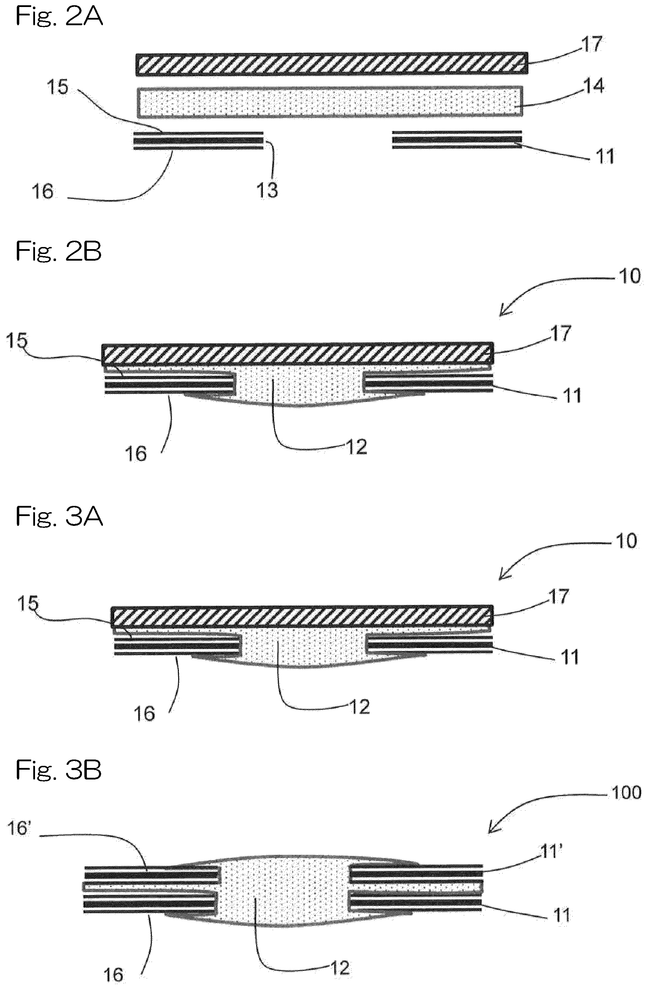

The present invention will be described below in detail based on exemplary embodiments. Fig. 1A is a schematic plan view of a woven fabric 11 used for a composite material 10 according to one embodiment of the present invention. Fig. IB is a schematic bottom view of the composite material 10 in which the woven fabric 11 shown in Fig. 1A is used. Fig. 2A is a schematic exploded cross-sectional view for illustrating a step of causing a thermoplastic elastomer resin 12 to penetrate through an opening 13 of the woven fabric 11 when the composite material 10 is produced. Fig. 2B is a schematic cross-sectional view for illustrating a state where the thermoplastic elastomer resin 12 penetrates through the opening 13 of the woven fabric 11 and is exposed at the other surface in the composite material 10.

Fig. 1A shows the woven fabric 11 that includes multifilaments each having a tensile elastic modulus of 20 GPa or higher, as weaving yarns (warp yarns 11a, weft yarns 11b). The woven fabric 11 has the openings 13 through which the thermoplastic elastomer resin 12 penetrates. Fig. 1B shows the composite material 10 in a state where the thermoplastic elastomer resin 12 penetrates through the openings 13 from one surface (upper surface) of the woven fabric 11, and is exposed at the other surface (lower surface) of the woven fabric 11, as viewed from the lower surface side of the composite material. As shown in Fig. 1B, the composite material 10 at least includes the woven fabric 11 and the thermoplastic elastomer resin 12, and a part of the thermoplastic elastomer resin 12 is exposed at the lower surface of the woven fabric 11.

As shown in Fig. 2A, when the composite material 10 according to one embodiment is produced, the woven fabric 11, a thermoplastic elastomer resin sheet 14, and a further member 17 are disposed in order. The thermoplastic elastomer resin sheet 14 is pressed out at a predetermined pressure from one surface 15 of the woven fabric 11 toward the other surface 16 through the opening 13 of the woven fabric 11, so that, as shown in Fig. 2B, the thermoplastic elastomer resin 12 penetrates through the woven fabric 11 via the opening 13, and the thermoplastic elastomer resin 12 is exposed at the other surface 16 of the woven fabric 11.

The composite material 10 may include the further member 17 or may not include the further member 17 as long as the thermoplastic elastomer resin 12 is exposed at the other surface 16 of the woven fabric 11. For example, the further member 17 having releasability may be peeled from the thermoplastic elastomer resin sheet 14. Furthermore, the woven fabric 11 and the thermoplastic elastomer resin sheet 14 may be merely disposed without using the further member 17, and the thermoplastic elastomer resin sheet 14 may be pressed out at a predetermined pressure from the one surface 15 of the woven fabric 11 toward the other surface 16 through the openings 13 of the woven fabric 11.

For example, in a case where the composite material is formed as a reinforcement, the further member 17 may be used in combination when the reinforcement is produced. The thermoplastic elastomer resin sheet 14 and the further member 17 are disposed in order, on the one surface 15 of the woven fabric 11, and the further member 17 and the thermoplastic elastomer resin sheet 14 may be thermocompression bonded toward the woven fabric 11 at a predetermined pressure from the one surface 15 of the woven fabric 11 toward the other surface 16. In this case, the thermoplastic elastomer resin sheet 14 is brought into contact with the further member 17 and pressed out from the openings 13 of the woven fabric 11, so that the composite material in which, while the further member 17 and the thermoplastic elastomer resin 12 are adhered to each other, the thermoplastic elastomer resin 12 penetrates through the woven fabric 11 via the openings 13, and the thermoplastic elastomer resin 12 is exposed at the other surface 16 of the woven fabric 11, can be formed.

Conventionally, in a case where fibers each having a high tensile elastic modulus are used as weaving yarns, permeability of a resin with respect to a woven fabric is insufficient due to the high tensile elastic modulus of the weaving yarns, and therefore, a resin solution is applied in order to form a composite with the resin, in general. In this case, although the entirety of the woven fabric is coated with the resin via the weaving yarns, integration with the woven fabric is insufficient even if such coating is merely performed, and the coating is also insufficient for adhesion to a further member.

On the other hand, in the composite material 10 obtained by pressing out the thermoplastic elastomer resin sheet 14 from the one surface 15 of the woven fabric 11 so as to penetrate through the openings 13 of the woven fabric 11, and exposing the thermoplastic elastomer resin sheet 14 at the other surface 16 of the woven fabric 11 at a predetermined exposed area rate, the thermoplastic elastomer resin 12 exposed at the surface 16 side of the woven fabric 11 acts as an anchor, and integration of the woven fabric 11 and the thermoplastic elastomer resin 12 can be enhanced. It is considered that, where the further member 17 is disposed, peeling resistance between the further member 17 and the thermoplastic elastomer resin 12 can be enhanced, and, when the further member 17 is peeled from the thermoplastic elastomer resin 12 adjacent to the further member 17, peeling resistance between the further member 17 and the thermoplastic elastomer resin 12 can be enhanced.

The further member 17 can be selected as appropriate according to applications of the composite material. For example, the further member 17 may be a woven fabric that includes multifilaments or monofilaments each having a tensile elastic modulus of 20 GPa or higher, as weaving yarns.

For example, Figs. 3A and 3B show an example where a composite material is produced by using, as the further member 17, a woven fabric 11' that includes multifilaments each having a tensile elastic modulus of 20 GPa or higher, as weaving yarns (warp yarns 11a, weft yarns 11b). In these figures, the thermoplastic elastomer resin sheet 14 is disposed between the woven fabric 11 and the woven fabric 11'. In a case where the thermoplastic elastomer resin sheet 14 is pressed out at a predetermined pressure from the one surface 15 of the woven fabric 11 toward the other surface 16 through the opening 13 of the woven fabric 11, the thermoplastic elastomer resin sheet 14 is similarly pressed out from one surface 15' of the woven fabric 11' toward another surface 16' also in an opening 13' of the woven fabric 11'.

As a result, as shown in Fig. 3B, a composite material in which the thermoplastic elastomer resin 12 penetrates through the woven fabrics 11 and 11' via the openings 13 and 13', and the thermoplastic elastomer resin 12 is exposed at the other surfaces 16 and 16' of the woven fabrics 11 and 11', is formed. In such a composite material, woven fabrics including high modulus fibers are doubly disposed, and strength as a reinforcement can be enhanced.

The woven fabrics 11 and 11' may be the same or different from each other. The weaving yarns of the woven fabrics 11 and 11' may be parallel to each other, or may be non-parallel to each other. For example, from the viewpoint of enhancing isotropy, weft yarns and/or warp yarns of the woven fabrics 11 and 11' may have an intersect angle ranging from 30 to 60°. As shown in Fig. 3B, the openings 13 and 13' of the woven fabrics 11 and 11' may be disposed at the same position or may be disposed at different positions in the surface direction.

In a case where a further member (not shown) is disposed as necessary, even a woven fabric that includes high modulus fibers each having poor adhesiveness can have enhanced adhesiveness to the further member by exposing the thermoplastic elastomer resin 12 externally from the woven fabric including the high modulus fibers.

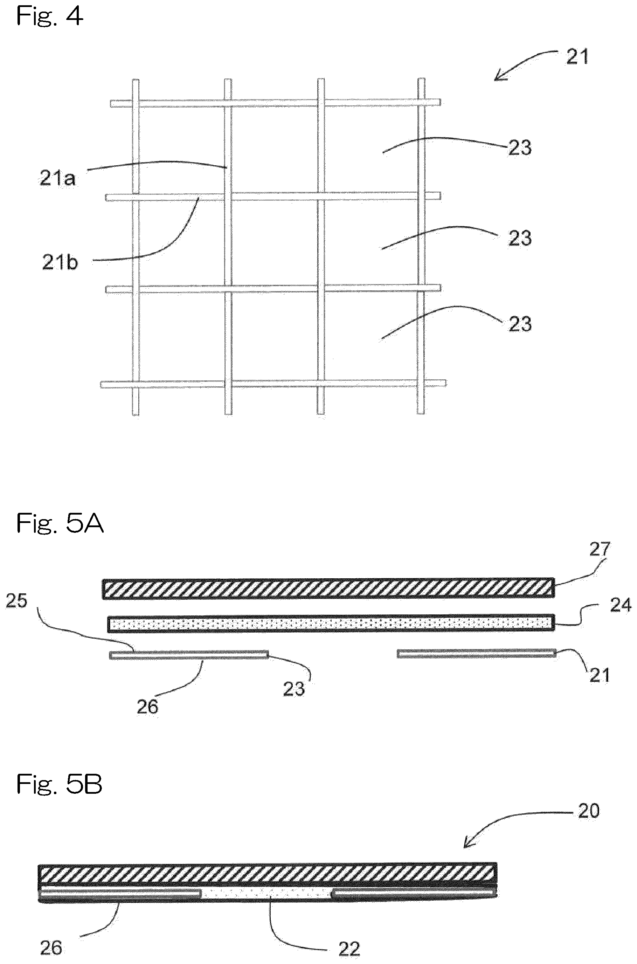

Fig. 4 is a schematic enlarged plan view of a woven fabric 21 used for a composite material 20 according to another embodiment of the present invention. Fig. 5A is a schematic exploded cross-sectional view for illustrating a step of causing a thermoplastic elastomer resin 22 to penetrate through the woven fabric 21 when the composite material 20 is produced. Fig. 5B is a schematic cross-sectional view for illustrating a state where the thermoplastic elastomer resin 22 penetrates through an opening 23 of the woven fabric 21 and is exposed at the other surface in the composite material 20.

Fig. 4 shows the woven fabric 21 that includes monofilaments each having a tensile elastic modulus of 20 GPa or higher, as weaving yarns (warp yarns 21a, weft yarns 21b). As shown in Fig. 5A, when the composite material 20 is produced, the woven fabric 21, a thermoplastic elastomer resin sheet 24, and a further member 27 are disposed in order. The thermoplastic elastomer resin sheet 24 is pressed out at a predetermined pressure from one surface 25 of the woven fabric 21 toward the other surface 26 through the opening 23 of the woven fabric 21. As a result, as shown in Fig. 5B, the thermoplastic elastomer resin 22 penetrates through the woven fabric 21 via the opening 23, and the thermoplastic elastomer resin 22 is exposed at the other surface 26 of the woven fabric 21.

The composite material 20 may include the further member 27 or may not include the further member 27 as long as the thermoplastic elastomer resin 22 is exposed at the other surface 26 of the woven fabric 21. For example, the further member 27 having releasability may be peeled from the thermoplastic elastomer resin sheet 24. Furthermore, the woven fabric 21 and the thermoplastic elastomer resin sheet 24 may be merely disposed without using the further member 27, and the thermoplastic elastomer resin sheet 24 may be pressed out at a predetermined pressure from the one surface 25 of the woven fabric 21 toward the other surface 26 through the openings 23 of the woven fabric 21.

For example, in a case where the composite material is formed as a reinforcement, the further member 27 may be used in combination when the reinforcement is produced. The thermoplastic elastomer resin sheet 24 and the further member 17 are disposed in order, on the one surface 25 of the woven fabric 21, and the further member 27 and the thermoplastic elastomer resin sheet 24 may be thermocompression bonded toward the woven fabric 21 at a predetermined pressure from the one surface 25 of the woven fabric 21 toward the other surface 26. In this case, the thermoplastic elastomer resin sheet 24 is brought into contact with the further member 27 and pressed out from the openings 23 of the woven fabric 21, so that the composite material in which, while the further member 27 and the thermoplastic elastomer resin 22 are adhered to each other, the thermoplastic elastomer resin 22 penetrates through the woven fabric 21 via the openings 23, and the thermoplastic elastomer resin 22 is exposed at the other surface 26 of the woven fabric 21, can be formed.

In the composite material 20 obtained by pressing out the thermoplastic elastomer resin sheet 24 from the one surface 25 of the woven fabric 21 so as to penetrate through the openings 23 of the woven fabric 21, and exposing the thermoplastic elastomer resin sheet 24 at the other surface 26 of the woven fabric 21 at a predetermined exposed area rate, the thermoplastic elastomer resin 22 that penetrates through the openings 23 of the woven fabric 21 is entangled with the weaving yarns 21 (21a, 21b), the thermoplastic elastomer resin 22 acts as an anchor, and integration of the thermoplastic elastomer resin 22 and the weaving yarns 21 (21a, 21b) can be enhanced. It is considered that, where the further member 27 is disposed, peeling resistance between the further member 27 and the thermoplastic elastomer resin 22 can be enhanced, and, when the further member 27 is peeled from the thermoplastic elastomer resin 22 adjacent to the further member 27, peeling resistance between the further member 27 and the thermoplastic elastomer resin 22 can be enhanced.

Furthermore, it is considered that, since the woven fabric 21 has a specific weaving density and opening rate, integration of the high modulus monofilaments of the woven fabric and the thermoplastic elastomer resin can be enhanced, and reinforcing performance and durability of the composite material can be enhanced.

The further member 27 can be selected as appropriate according to applications of the composite material. Preferably, the further member 27 may be a woven fabric that includes monofilaments or multifilaments each having a tensile elastic modulus of 20 GPa or higher, as weaving yarns.

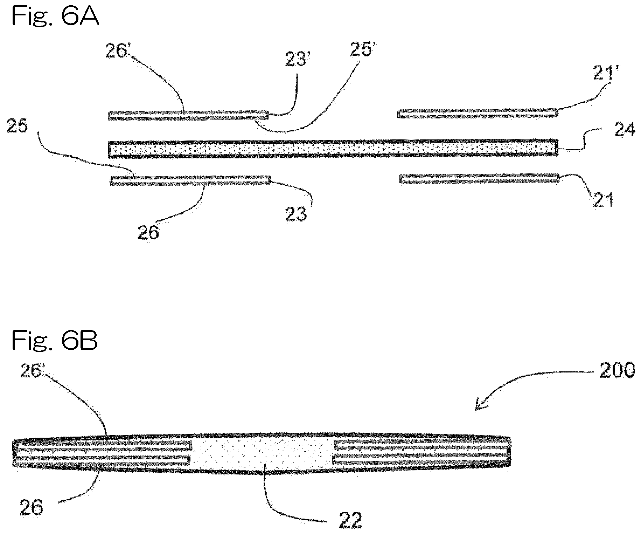

For example, Figs. 6A and 6B show an example where a composite material is produced by using, as the further member 27, a woven fabric 21' that includes monofilaments each having a tensile elastic modulus of 20 GPa or higher, as weaving yarns (warp yarns 21a, weft yarns 21b). In these figures, the thermoplastic elastomer resin sheet 24 is disposed between the woven fabric 21 and the woven fabric 21'. In a case where the thermoplastic elastomer resin sheet 24 is pressed out at a predetermined pressure from the one surface 25 of the woven fabric 21 toward the other surface 26 through the opening 23 of the woven fabric 21, the thermoplastic elastomer resin sheet 24 is similarly pressed out from one surface 25' of the woven fabric 11' toward another surface 26' also in an opening 23' of the woven fabric 21'.

As a result, as shown in Fig. 6B, a composite material in which the thermoplastic elastomer resin 22 penetrates through the woven fabrics 21 and 21' via the openings 23 and 23', and the thermoplastic elastomer resin 22 is exposed at the other surfaces 26 and 26' of the woven fabrics 21 and 21', is formed. In such a composite material, woven fabrics including high modulus fibers are doubly disposed, and strength as a reinforcement can be enhanced.

The woven fabrics 21 and 21' may be the same or different from each other. The weaving yarns of the woven fabrics 21 and 21' may be parallel to each other, or may be non-parallel to each other. For example, from the viewpoint of enhancing isotropy, weft yarns and/or warp yarns of the woven fabrics 21 and 21' may have an intersect angle ranging from 30 to 60°. As shown in Fig. 6B, the openings 23 and 23' of the woven fabrics 21 and 21' may be disposed at the same position or may be disposed at different positions in the surface direction.

In a case where a further member (not shown) is disposed as necessary, even a woven fabric that includes high modulus fibers each having poor adhesiveness can have enhanced adhesiveness to the further member by exposing the thermoplastic elastomer resin 22 externally from the woven fabric including the high modulus fibers.

In steps of producing the composite material, the thermoplastic elastomer resin is pressed out from one surface (side on which the resin sheet is disposed), and the resin is thus spread from the openings to surrounding area the openings at the other surface (side on which the resin is exposed), whereby the shape of the fiber of the woven fabric can be easily confirmed at the other surface.

In the composite material in which the resin is pressed out from one surface of the woven fabric and exposed at the other surface, in a case where an exposed area rate of the resin at the other surface is 100%, the resin on the side (one surface) on which the resin is inserted usually has a greater thickness than the resin on the side (the other surface) on which the resin is exposed. Therefore, by observing the thickness of the resin at the cross section of the composite material, the thicker side may be determined as an insertion surface, and the thinner side may be determined as an exposure surface. Alternatively, the side (one surface) on which the resin is inserted or the side (the other surface) on which the resin is exposed may be determined by, for example, determining whether or not the resin flows and is spread from the openings of the woven fabric to surrounding area, on the surface of the composite material

The exposed area rate can be adjusted by, for example, thermal fluidity and an amount of the thermoplastic elastomer resin in the composite material, an opening rate of the woven fabric, production method, and the like. For example, the higher the thermal fluidity of the thermoplastic elastomer resin is and the greater an amount of the thermoplastic elastomer resin is, the higher the exposed area rate tends to be. The higher the opening rate of the woven fabric is, the higher the exposed area rate tends to be. The exposed area can be adjusted also by, for example, a temperature and pressure for a thermocompression bonding step, and a cooling step after the thermocompression bonding step in the production method.

In the composite material, the thermoplastic elastomer resin is exposed over a predetermined area on the other surface of the woven fabric. In a case where the woven fabric has multifilaments as weaving yarns, the exposed area rate as an index indicating the spread of the resin may be, for example, 10% or higher. A high exposed area rate of the resin allows the anchor effect to be easily exhibited. Therefore, the exposed area rate of the resin may be preferably 15% or higher (15 to 100%), more preferably 18% or higher, and even more preferably 25% or higher. On the other hand, the exposed area rate of the resin may be 100% or lower, and may be, for example, 99% or lower, preferably 95% or lower, and more preferably 85% or lower. A low exposed area rate of the resin allows enhancement of flexibility of the composite material.

A percent obtained by subtracting the opening rate of the woven fabric from the exposed area rate of the resin exposed on the woven fabric made of multifilaments may be, for example, 1% or higher, preferably 7% or higher, and more preferably 10% or higher. The upper limit thereof is not limited to a specific one, and may be 90% or lower and more preferably 80% or lower.

In a case where the woven fabric has monofilaments as weaving yarns, the exposed area rate of the resin may be, for example, 50 to 100%, preferably 70 to 100%, and more preferably 90 to 100%. The exposed area rate of the resin is a value measured by the method described in the Examples below.

The percent obtained by subtracting the opening rate of the woven fabric from the exposed area rate of the resin exposed on the woven fabric made of monofilaments may be, for example, 15% or higher, preferably 20% or higher, and more preferably 30% or higher. The upper limit thereof s not limited to a specific one, and may be 80% or lower and more preferably 70% or lower.

As shown in Fig. 3B, Fig. 6B, and the like, in a case where the composite material has two woven fabrics and the resin is exposed on the outer sides (that is, outer side of each of the woven fabrics) of the composite material, at least one surface of the composite material may have the predetermined exposed area rate.

### Method for Producing Composite Material

A method for producing the composite material according to the present invention includes:
stacking a woven fabric, a thermoplastic elastomer resin sheet, and, as necessary, a further member in order, the woven fabric having openings and containing weaving yarns being fibers each having a tensile elastic modulus of 20 GPa or higher; and
softening the thermoplastic elastomer resin sheet while heating to press out a thermoplastic elastomer resin of the thermoplastic elastomer resin sheet from one surface of the woven fabric into the openings of the woven fabric, and to expose the thermoplastic elastomer resin on the other surface of the woven fabric.

### Woven Fabric

The woven fabric includes high modulus fibers as weaving yarns. The high modulus fibers used as the weaving yarns may be monofilaments or multifilaments according to the woven fabric structure. Each of one monofilament and one multifilament constitutes one weaving yarn. Examples of the weaving yarns include warp yarns and weft yarns, and the woven fabric used in the present invention includes high modulus fibers as the warp yarns and/or weft yarns. The warp yarns and/or weft yarns may be formed of one weaving yarn or a plurality of weaving yarns.

In the case of the monofilaments, a single fiber fineness may be, for example, 1 to 100 dtex, preferably 5 to 80 dtex, and more preferably 8 to 60 dtex.

In the case of the multifilaments, a single fiber fineness may be, for example, 0.1 to 20 dtex, preferably 1 to 10 dtex, and more preferably 1 to 15 dtex. A total fineness may be, for example, 10 to 10,000 dtex, preferably 10 to 5,000 dtex, and more preferably 50 to 3,000 dtex.

The number of filaments per one weaving yarn as the multifilament may be, for example, 3 or more, preferably 5 or more, more preferably 15 or more, and even more preferably 25 or more, from the viewpoint of allowing, when the thermoplastic elastomer resin penetrates through the openings of the woven fabric, the resin to be inserted in gaps of the multifilaments while the resin penetrates through the openings. The number of the filaments can be set as appropriate according to the single fiber fineness, and may be 300 or less and more preferably 200 or less from the viewpoint of the thin-sheet-like thickness.

The multifilament may be a soft twisted yarn (for example, 10 to 300 turns per 1 m). However, it is preferable that the multifilament is substantially an untwisted yarn (for example, less than 10 turns per 1 m). Furthermore, an opening and/or a smoothing process may be performed for the multifilament as necessary.

The high modulus fiber is not particularly limited as long as the fiber has a tensile elastic modulus of 20 GPa or higher. Examples thereof include fibers formed of liquid crystal polyester (VECTRAN UM (trademark) manufactured by Kuraray Co., Ltd., VECTRAN HT (trademark) manufactured by Kuraray Co., Ltd., SIVERAS (trademark) manufactured by Toray Industries, Inc., Zxion (trademark) manufactured by KB Seiren, Ltd., etc.), fibers formed of ultra-high molecular weight polyethylene (IZANAS (trademark) manufactured by TOYOBO Co., Ltd., Dyneema (trademark) manufactured by DSM, etc.), fibers formed of aramid (Kevlar (trademark) manufactured by DU PONT-TORAY CO., LTD., Twaron (trademark) manufactured by TEIJIN LIMITED, Technora (trademark) manufactured by TEIJIN LIMITED, etc.), and fibers formed of polyp-phenylenebenzobisoxazole (ZYLON (trademark) manufactured by TOYOBO Co., Ltd., etc.). Among them, liquid crystal polyester fiber is preferable from the viewpoint of inhibiting the fiber from being altered due to moisture absorption and enhancing the elastic modulus of the composite material.

For example, the liquid crystal polyester fiber can be produced, for example, by melt-spinning a liquid crystal polyester and further performing solid-phase polymerization of an as-spun yarn as necessary.

The liquid crystal polyester is polyester exhibiting optical anisotropy (liquid crystallinity) in a melt phase, and can be, for example, determined by placing a sample on a hot stage, heating the sample in a nitrogen atmosphere, and observing light transmitted through the sample by a polarizing microscope. The liquid crystal polyester includes, for example, repeating structural units derived from aromatic diols, aromatic dicarboxylic acids, aromatic hydroxycarboxylic acids, and the like. The structural units are not limited to a particular chemical structure as long as the effect of the present invention is not impaired. Furthermore, the liquid crystal polyester may include structural units derived from aromatic diamines, aromatic hydroxyamines, or aromatic aminocarboxylic acids in the range which does not impair the effect of the present invention.

For example, preferable structural units may include units shown in Table 1.

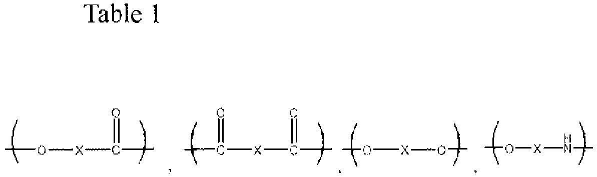

In the formula, X is selected from the following 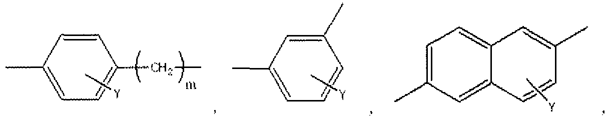 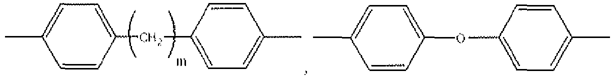 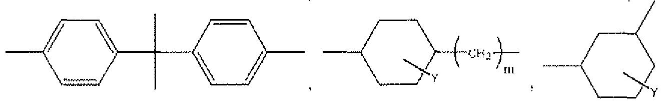 m is an integer from 0 to 2, Y is a substituent selected from hydrogen atom, halogen atoms, alkyl groups, aryl groups, aralkyl groups, alkoxy groups, aryloxy groups, aralkyloxy groups.
in which the number of Y ranges from one substituent to the maximum number of substituents that are replaceable in an aromatic ring, and Y is independently selected from the group consisting of, for example, a hydrogen atom, a halogen atom (for example, fluorine atom, chlorine atom, bromine atom, iodine atom, and the like), an alkyl group (for example, an alkyl group having 1 to 4 carbon atoms such as methyl group, ethyl group, isopropyl group, and t-butyl group), an alkoxy group (for example, methoxy group, ethoxy group, isopropoxy group, n-butoxy group, and the like), an aryl group (for example, phenyl group, naphthyl group, and the like), an aralkyl group [for example, benzyl group (phenylmethyl group), phenethyl group (phenylethyl group), and the like], an aryloxy group (for example, phenoxy group and the like), and an aralkyloxy group (for example, benzyloxy group and the like).

Examples of the structural units more preferably include structural units indicated below as examples (1) to (18) in Tables 2, 3, and 4. In a case where the structural unit in the formula can represent a plurality of structures, combination of two or more units may be used as structural units for a polymer.

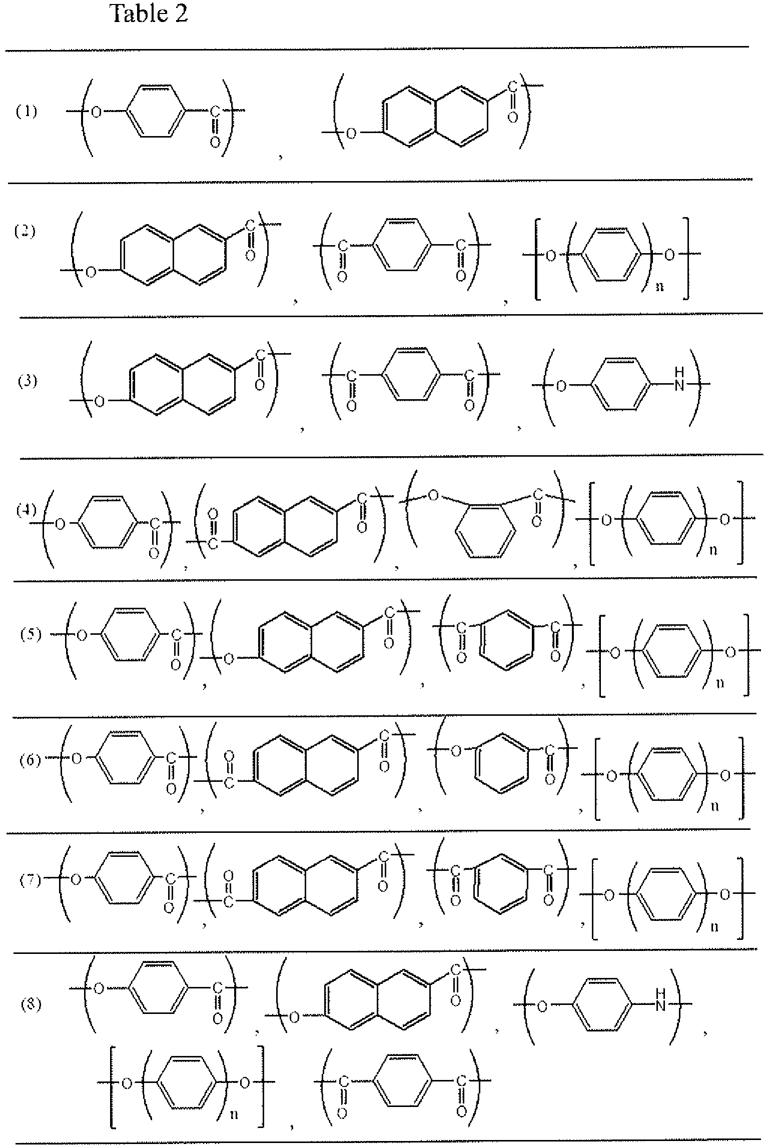

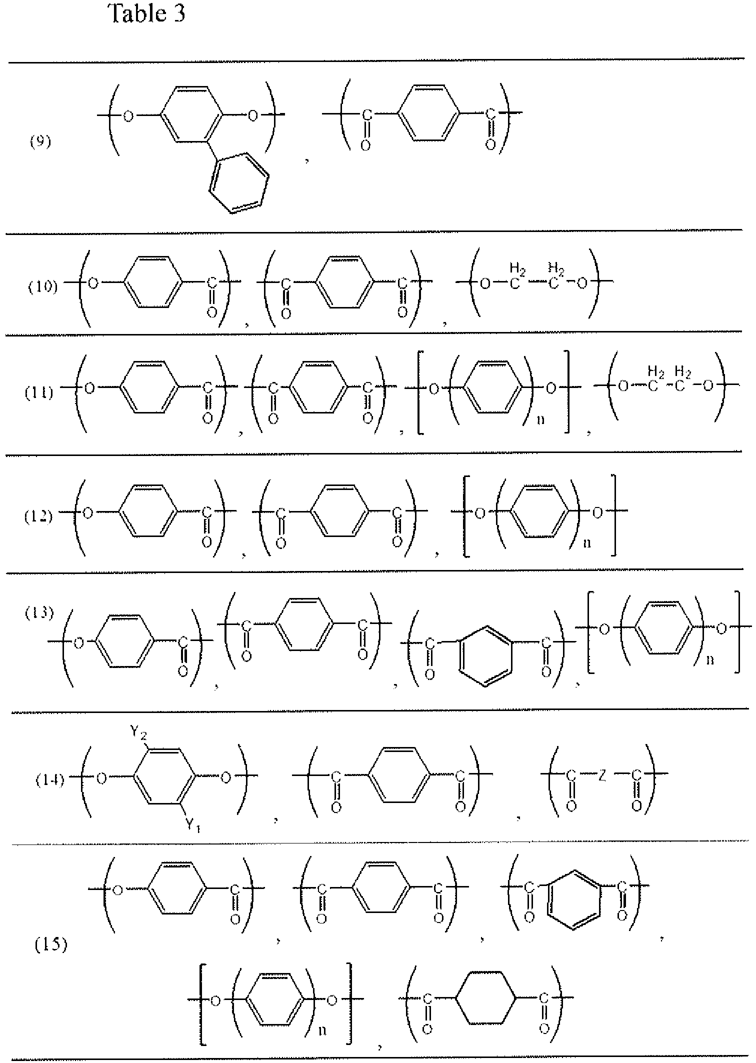

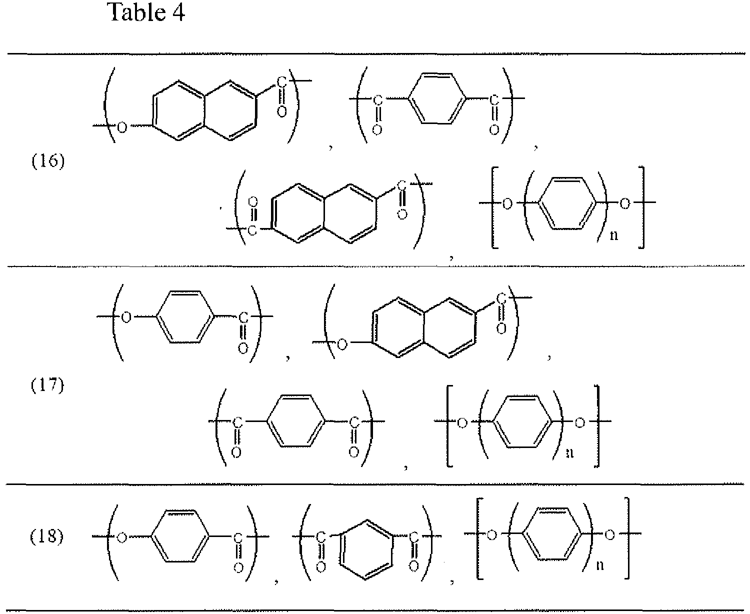

In the structural units shown in Tables 2, 3, and 4, n represents an integer of 1 or 2, among each of the structural units, n = 1 and n = 2 may independently exist, or may exist in combination, each of Yₜ and Y₂ may independently represent, for example, a hydrogen atom, a halogen atom (for example, fluorine atom, chlorine atom, bromine atom, iodine atom, and the like), an alkyl group (for example, an alkyl group having 1 to 4 carbon atoms such as methyl group, ethyl group, isopropyl group, and t-butyl group), an alkoxy group (for example, methoxy group, ethoxy group, isopropoxy group, n-butoxy group, and the like), an aryl group (for example, phenyl group, naphthyl group, and the like), an aralkyl group [for example, benzyl group (phenylmethyl group), phenethyl group (phenylethyl group), and the like], an aryloxy group (for example, phenoxy group and the like), or an aralkyloxy group (for example, benzyloxy group and the like). Among them, the preferable one may include a hydrogen atom, a chlorine atom, a bromine atom, and a methyl group.

Z may include substitutional groups denoted by following formulae.

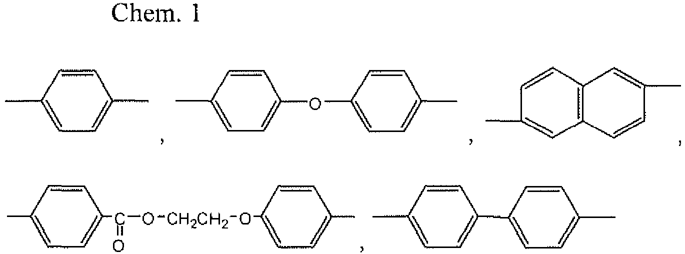

The liquid crystal polyester preferably includes two or more kinds of structural units each having a naphthalene skeleton. Particularly preferably, the liquid crystal polyester includes both a structural unit (A) derived from hydroxybenzoic acid and a structural unit (B) derived from hydroxynaphthoic acid. For example, examples of the structural unit (A) include a structural unit represented by the following formula (A), and examples of the structural unit (B) include a structural unit represented by the following formula (B). In order to improve melt-formability, a ratio of the structural unit (A) to the structural unit (B) may be preferably in a range of former/latter of from 9/1 to 1/1, more preferably from 7/1 to 1/1, and even more preferably from 5/1 to 1/1.

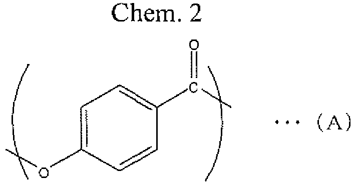

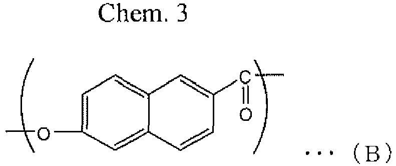

The total proportion of the structural units of (A) and (B) may be, based on all the structural units, for example, 65 mol% or more, more preferably 70 mol% or more, and further preferably 80 mol% or more. A liquid crystal polyester having the structural unit (B) at a proportion of 4 to 45 mol % is especially preferred among polymers.

The liquid crystal polyester suitably used in the present invention preferably has a melting point of 250 to 360°C and more preferably 260 to 320°C. As used herein, the melting point refers to a main endothermic peak temperature determined and observed using a differential scanning calorimeter (DSC; "TA3000" produced by Mettler-Toledo International Inc.) in accordance with JIS K 7121 test method. Specifically, 10 to 20 mg of a sample is encapsulated in an aluminum pan in the DSC device. Then the temperature is increased at a rate of 20°C/min while supplying nitrogen as a carrier gas at a flow rate of 100 cc/min to measure an endothermic peak. In a case where the peak does not clearly appear in the 1st run of the DSC measurement depending on the kind of polymer, the temperature is increased to a temperature that is 50°C higher than an expected flow temperature, at a temperature increase rate of 50°C/min. After keeping the temperature for 3 minutes so as to make the sample completely molten, the sample is thereafter cooled to 50°C at a temperature decrease rate of -80°C/min. Thereafter, the endothermic peak is measured at a temperature increase rate of 20°C/min.

The liquid crystal polyester may be added with a thermoplastic polymer such as a polyethylene terephthalate, a modified polyethylene terephthalate, a polyolefin, a polycarbonate, a polyamide, a polyphenylene sulfide, a polyether ether ketone, and a fluororesin, and others, as long as the effect of the present invention is not impaired. Furthermore, additives may also be added, including inorganic substances such as titanium oxide, kaolin, silica, and barium oxide; carbon black; a colorant such as dye and pigment; an antioxidant; an ultraviolet-ray absorbent; and a light stabilizer.

The high modulus fiber may be a non-composite fiber or a composite fiber. The cross-sectional shape of the high modulus fiber is not particularly limited to a specific one, and the high modulus fiber may be a normal fiber having a circular cross-sectional shape (also including a cocoon-like shape), and may be a fiber having a modified cross-sectional shape other than the circular cross-sectional shape. In a case where the fiber has a modified cross-sectional shape, the cross-sectional shape may be any of, for example, a quadrangular shape, a polygonal shape, a triangular shape, a hollow shape, a flattened shape, a multi-leaves-like shape, a cross shape, a dog-bone shape, a T-shape, and a V-shape. The fiber having the modified cross-sectional shape is a non-composite fiber in many cases.

Examples of the composite fiber include a core-sheath-type composite fiber formed of a sheath component and a core component, a sea-island-type composite fiber formed of a sea component and an island component, a side-by-side type composite fiber formed of side components, and a split fiber in which surface areas of two components are increased. Moreover, the constituent component may further have a sea-island structure as necessary. In the composite fiber, a high modulus resin capable of forming the composite fiber may be used for at least any one of the constituent components, and preferable examples of the resin include a liquid crystal polyester, an aramid, and an ultra-high molecular weight polyethylene. From the viewpoint of heat resistance and adhesiveness to the thermoplastic elastomer resin, a liquid crystal polyester or an aramid is more preferable.

The composite fiber is preferably used for the woven fabric having monofilaments as weaving yarns. The monofilament of the composite fiber can include a resin having good adhesiveness to the thermoplastic elastomer resin as an interface that comes into direct contact with the thermoplastic elastomer resin. As a result, the anchor effect exhibited by the thermoplastic elastomer resin can be enhanced.

Preferable examples of the composite fiber include: a core-sheath-type composite fiber in which the core component is a liquid crystal polyester, and the sheath component is a flexible thermoplastic resin; and a hybrid composite fiber in which the core component is a liquid crystal polyester, the sheath component has a sea-island structure, and the sea component is a flexible thermoplastic resin and the island component is a liquid crystal polyester in the sea-island structure.

Examples of the flexible thermoplastic resin include a resin which does not have an aromatic ring on a main chain, and a resin which has aromatic rings on a main chain and has Four or more atoms on the main chain between the aromatic rings. Specific examples thereof include: a polyolefin; a polyamide; a polycarbonate; a polyphenylene sulfide (abbreviation: PPS); a polyester such as a polyethylene terephthalate, a modified polyethylene terephthalate, an amorphous polyarylate, and a polyethylene naphthalate (abbreviation: PEN); a polyether ether ketone; and a fluororesin. The flexible thermoplastic resin may be used singly or in combination of two or more. One of the resins may be a main thermoplastic resin (for example, occupies 80 wt% or more), and the other of the resins may be a thermoplastic resin to be added. Among them, PPS or PEN is preferably used as the main thermoplastic resin.

Examples of the hybrid composite fiber in which a liquid crystal polyester is used for the core component, PEN is used for the sea component of the sheath component, and a liquid crystal polyester is used for the island component of the sheath component include VECRY (trademark) manufactured by Kuraray Co., Ltd.

The high modulus fiber may have a tensile elastic modulus of 20 GPa or higher and preferably 30 GPa or higher. The upper limit of the tensile elastic modulus is not particularly limited to a specific one, and may be, for example, 300 GPa or lower, preferably 200 GPa or lower, and more preferably 100 GPa or lower from the viewpoint of fatigue resistance. The tensile elastic modulus is a value measured by the method described in the Examples below.

The weave of the woven fabric is not particularly limited to a specific one as long as the openings through which the thermoplastic elastomer resin can penetrate can be formed, and can be selected from, for example, a plain weave, a satin weave, and a twill weave. Among them, plain weave is preferable from the viewpoint of facilitating production method. The woven fabric can be produced by using the high modulus fiber as the weaving yarns and weaving by a usual method. The weaving yarn including the high modulus fiber may be a weft yarn, a warp yarn, or both of them.

From the viewpoint of enhancing penetrability of the thermoplastic elastomer resin, a length / width ratio of the openings is preferably as uniform as possible, and, for example, each of the openings may have the length / width ratio of from 0.5 to 2 and preferably from 0.6 to 1.8. The length direction represents the largest value of the length of the opening which is parallel to the longitudinal direction of the woven fabric. The width direction represents the largest value of the length of the opening which is perpendicular to the length direction.

In the length direction and the width direction, the larger opening length may be, for example, 0.04 mm or longer, preferably 0.05 mm or longer, and more preferably 0.08 mm or longer. The upper limit thereof may be, for example, about 0.2 mm.

Openings in the woven fabric may have an average opening area of, for example, 0.0010 mm² or more and preferably 0.0020 mm² or more from the viewpoint of strengthening the anchoring force of the resin.

In a case where the woven fabric has monofilaments as the weaving yarns, the upper limit of the average opening area may be, for example, 0.030 mm² or less. In a case where the woven fabric has multifilaments as the weaving yarns, the upper limit thereof may be, for example, 0.30 mm² or less.

The physical properties of the woven fabric are preferably selected as appropriate according to whether the woven fabric has monofilaments or multifilaments as the weaving yarns. Hereinafter, an inch means 2.54 cm.

The woven fabric having monofilaments as the weaving yarns may have an opening rate of 70% or less, and, for example, 20 to 70%, preferably 30% to 68%, and more preferably 40% to 65%. If the opening rate is excessively high, the thermoplastic elastomer resin and the weaving yarns are difficult to be entangled, so that integration of the thermoplastic elastomer resin and the woven fabric is reduced.

The woven fabric having monofilaments as the weaving yarns may have an opening area per square inch of, for example, 200 mm²/inch² or more, preferably 220 mm²/inch² or more, and more preferably 250 mm²/inch² or more. The upper limit thereof is not particularly limited to a specific one, and may be 450 mm²/inch² or less.

The number of the openings per square inch of the woven fabric having monofilaments as the weaving yarns may be, for example, 10000/inch² or more and preferably 15000/inch² or more. The upper limit of the number of the openings is not particularly limited to a specific one, and may be, for example, 100000/inch².

The woven fabric having monofilaments as the weaving yarns may have a thickness of, for example, 10 to 100 µm, preferably 20 to 80 µm, and more preferably 30 to 60 µm. In a case where the thickness of the woven fabric is large, even when the size of the opening is small, the resin tends to easily penetrate through the openings. On the other hand, if the thickness is excessively large, exposure of the resin may be insufficient.

The woven fabric having monofilaments as the weaving yarns may have a basis weight of, for example, 8 g/m² or more, preferably 9 g/m² or more, and more preferably 10 g/m² or more. The upper limit thereof is not particularly limited to a specific one, and may be 30 g/m² or less.

The woven fabric having monofilaments as the weaving yarns may have a weaving density (warp density or weft density) of 110 yarns/inch or more and preferably 130 yarns/inch or more. If the weaving density is low, the thermoplastic elastomer resin and the weaving yarns are difficult to be entangled, so that integration of the thermoplastic elastomer resin and the woven fabric is reduced. The upper limit thereof is not particularly limited to a specific one, and may be 400 yarns/inch or less. In the woven fabric, the weaving yarn density in one direction and the weaving yarn density in the other direction may be the same or different from each other.

The woven fabric having multifilaments as the weaving yarns may have an opening rate of, for example, 5% or more, preferably 6% or more, and more preferably 7% or more. The upper limit thereof is not particularly limited to a specific one, and may be 20% or less.

The woven fabric having multifilaments as the weaving yarns may have an opening area per square inch of, for example, 3 mm²/inch² or more, preferably 10 mm²/inch² or more, more preferably 12 mm²/inch² or more, even more preferably 13 mm²/inch² or more, and particularly preferably 14 mm²/inch² or more. The upper limit thereof is not particularly limited to a specific one, and may be 200 mm²/inch² or less.

A thickness of the woven fabric having multifilaments as the weaving yarns can be selected according to the states of the openings of the woven fabric, and may be, for example, 40 to 400 µm, preferably 45 to 300 µm, and more preferably 50 to 200 µm. In a case where the thickness of the woven fabric is large, even when the size of the opening is small, the resin tends to easily penetrate through the openings. On the other hand, if the thickness is excessively large, exposure of the resin may be insufficient.

The woven fabric having multifilaments as the weaving yarns may have a basis weight of, for example, 20 g/m² or more, preferably 30 g/m² or more, and more preferably 40 g/m² or more. The upper limit thereof is not particularly limited to a specific one, and may be 100 g/m² or less.

A weaving density (warp density or weft density) of the woven fabric having multifilaments as the weaving yarns may be selected as appropriate according to the fineness of the weaving yarn and the opening rate, and may be, for example, 20 yarns/inch or more, preferably 30 yarns/inch or more, and more preferably 40 yarns/inch or more. The upper limit thereof is not particularly limited to a specific one, and may be 200 yarns/inch or less.

The weaving yarns may be subjected to a sizing process for weaving. By performing the sizing process, trouble such as yarn breakage is unlikely to occur even in high speed weaving, and weaving efficiency can be enhanced. Furthermore, an untwisted or soft twisted multifilament can be bundled by the sizing process and the openings can be formed as desired. Examples of a sizing agent used for the sizing process include sizing agents containing a polyvinyl alcohol resin or an acrylic ester resin. In a case where the sizing agent hinders adhesiveness between the thermoplastic elastomer resin and the woven fabric, it is preferable that a conventional relaxing treatment is performed and the sizing agent component is removed after weaving.

In a case where the sizing process is performed, the sizing agent is preferably removed from the viewpoint of preventing clogging of the openings of the woven fabric. As a method for removing the sizing agent, a conventional removal method can be adopted. For example, the sizing agent can be removed by washing with water, a caustic soda solution, a cleaning agent, or the like.

The woven fabric may be processed so as to have a thin-sheet-like thickness as necessary before a composite forming process as long as the mesh opening of the woven fabric is dense and the openings of the woven fabric are not reduced. Examples of the method for thinning the woven fabric include (I) a method in which tension is applied to the woven fabric between rotary rollers or between heating rollers, and (2) a method in which pressure is applied to the woven fabric between a heating roller and a nip roller (for example, a method in which a calendering process is performed).

In the present invention, the weaving yarns of the woven fabric are formed of the high modulus fibers, and therefore, even when the woven fabric forms a composite with the thermoplastic elastomer resin, the structure of the woven fabric is not substantially altered before and after the composite is formed. Therefore, for example, the woven fabric in the composite body may have the opening rate, the opening length, and the opening area of the woven fabric as measured before the woven fabric forms a composite with the thermoplastic elastomer resin. The opening rate, the opening length, and the opening area of the woven fabric in the composite body may be measured by using CT or a microscope in a case where they are measured after the woven fabric forms a composite with the resin. Alternatively, the opening rate, the opening length, and the opening area of the woven fabric may be measured by using the woven fabric that is left after the thermoplastic elastomer resin is dissolved by a solvent and removed.

### Thermoplastic Elastomer Resin

Examples of the thermoplastic elastomer resin include a polyolefin-based elastomer resin, an ethylene-vinyl ester-based copolymer, a polyvinyl chloride-based elastomer resin, a polyurethane-based elastomer resin, a polystyrene-based elastomer resin, a polyester-based elastomer resin, a polyacrylic elastomer resin, a polyamide-based elastomer resin, a polydiene-based elastomer resin, a chlorinated polyethylene-based elastomer resin, and a fluororesin-based elastomer resin. The thermoplastic elastomer resin may be used singly or in combination of two or more.

In the present invention, among these thermoplastic elastomer resins, polyurethane-based thermoplastic elastomer is particularly preferable from the viewpoint of balance between physical properties and processability, and the like.

Examples of the polyolefin-based elastomer resin include a polyolefin-based elastomer that includes a polyethylene or a polypropylene as a hard segment, and an ethylene/propylene copolymer as a soft segment; and a composite polyolefin-based elastomer in which an olefin-based resin such as a polyisobutylene, an ethylene-propylene copolymer, an ethylene-propylene-diene terpolymer, and a polypropylene (PP) is used as a matrix, and ethylene-propylene rubber (EPDM, EPM) is finely dispersed. Specific examples thereof include "TAFMER MH5010" manufactured by Mitsui Chemicals, Inc., "PC6845" manufactured by SunAllomer Ltd., and "linear low density polyethylene ZF230" manufactured by Tosoh Corporation.

Examples of the ethylene-vinyl ester copolymer include copolymers of an ethylenically unsaturated monomer (for example, α-olefin such as ethylene, propylene, n-butene, isobutylene, and 1-hexene) and vinyl ester (for example, vinyl formate, vinyl acetate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, vinyl benzoate). Among them, an ethylene-vinyl acetate copolymer is preferable. Examples of a commercially available ethylene-vinyl acetate copolymer include "EVAFLEX (trademark)" manufactured by DuPont-Mitsui Polychemicals Co., Ltd., "Ultrathene (trademark)" manufactured by Tosoh Corporation, "UBE polyethylene" manufactured by Ube Industries, Ltd., "SUNTEC (trademark)" manufactured by Asahi Kasei Chemicals Corporation, "ethylene vinyl acetate copolymer NUC" manufactured by NUC Corporation, "EVAFLEX EV45LX" manufactured by DOW-MITSUI POLYCHEMICALS CO., LTD., and "Ultrathene 634" manufactured by Tosoh Corporation.

The polyvinyl chloride-based elastomer resin includes a crystalline polyvinyl chloride as a hard segment, and an amorphous polyvinyl chloride or an acrylonitrile as a soft segment.

The polyurethane-based elastomer resin includes a hard segment formed of a low-molecular-weight glycol and a diisocyanate and a soft segment formed of a polymeric diol and a diisocyanate.

Examples of the low-molecular-weight glycol include C₁₋₁₀ diols such as ethylene glycol, 1,4-butanediol, and 1,6-hexanediol. Examples of the polymeric diol include a poly(1,4-butylene adipate), a poly(1,6-hexane adipate), a polycaprolactone, a polyethylene glycol, a polypropylene glycol, and a polyoxytetramethylene glycol. Examples of diisocyanate include tolylene diisocyanate, 4,4-diphenylmethane diisocyanate, hexamethylene diisocyanate, and isophorone diisocyanate. As the polyurethane-based elastomer resin, for example, "Ecellent (trademark)" manufactured by Sheedom Co., Ltd. is commercially available.

The polystyrene-based elastomer resin includes a polystyrene as a hard segment, and a polybutadiene, a polyisoprene, a hydrogenated polybutadiene, a polyethylene, a polypropylene, etc., as a soft segment. Examples of the polystyrene-based elastomer resin include SBS (styrene/butadiene/styrene block copolymer), SIS (styrene/isoprene/styrene block copolymer), SEBS (styrene/ethylene/butadiene/styrene block copolymer), and SEPS (styrene/ethylene/propylene/styrene block copolymer). Specific examples of the commercially available polystylene-based elastomer resin include "SEPTON (trademark)" manufactured by Kuraray Co., Ltd. and "HYBRAR (trademark)" manufactured by Kuraray Co., Ltd.

The polyester-based elastomer resin includes an aromatic polyester resin component as a hard segment, and an aliphatic polyether or an aliphatic polyester as a soft segment. Examples of the commercially available polyester-based elastomer resin include "SKYPEL" manufactured by SK chemicals, "Hytrel" manufactured by DU PONT-TORAY CO., LTD., and "PELPRENE" manufactured by TOYOBO Co., Ltd.

The polyamide-based elastomer resin may be a polyether block polyamide, a polyester block polyamide, or a polyester ether block polyamide which include a polyamide-based elastomer resin component as a hard segment, and a polyether block or a polyester block as a soft segment.

The thermoplastic elastomer resin may have a Shore A hardness of, for example, 80 to 90. The thermoplastic elastomer resin may have a Shore D hardness of 30 to 50. These hardnesses are values measured by the method described in the Examples below.

The thermoplastic elastomer resin may have a MFR of 0.3 to 80 g/10 min as measured in accordance with ISO 1183, and preferably 0.5 to 60 g/10 min. The MFR is a value measured by the method described in the Examples below.

A thickness of the thermoplastic elastomer resin sheet is selected as appropriate according to, for example, the thickness and the opening rate of the woven fabric, and the thickness of the composite material, and may be, for example, about 10 to 200 µm (preferably 20 to 190 µm and more preferably 30 to 180 µm).

A further member is not particularly limited to a specific one as long as the member has adhesiveness to the thermoplastic elastomer resin, and can form the composite material. Examples thereof include materials and molded products which are formed of various plastics, metals, wood, rubber (natural rubber, silicone-based rubber, etc.), leather, artificial leather, cloth (woven and knitted fabrics, nonwoven fabric), paper, etc. The further member may be a molded body which has already been molded, or a material such as a sheet-like material which is required to be further molded.

The woven fabric, the thermoplastic elastomer resin sheet, and, as necessary, the further member are stacked in order, and the thermoplastic elastomer resin sheet is thereafter softened while being heated, the resin of the thermoplastic elastomer resin sheet is pressed out from one surface of the woven fabric into the openings of the woven fabric, and the resin is exposed at the other surface of the woven fabric.

For example, the heating temperature may be, for example, (MP - 10) to (MP + 50)°C and preferably (MP) to (MP + 40)°C with respect to the melting point MP°C of the thermoplastic elastomer resin of the thermoplastic elastomer resin sheet.

The pressing pressure for exposing the thermoplastic elastomer resin sheet at the other surface of the woven fabric is not particularly limited to a specific one as long as the resin can penetrate through the woven fabric made of the high modulus fibers and can be pressed out to the other surface. Although pressure may not necessarily be applied, the pressing pressure may be preferably about 0.1 to 5 MPa and more preferably about 0.2 to 2 MPa.

By performing pressing at a predetermined temperature, that is, by performing thermocompression bonding, the thermoplastic elastomer resin sheet and, as necessary, the further member are integrated to produce the composite material. In the pressing, pressure is preferably applied by flat pressing to the thermoplastic elastomer resin sheet and the woven fabric as uniformly as possible in the surface direction, from the viewpoint of enhancing penetrability of the resin with respect to the woven fabric made of the high modulus fibers.

After the thermocompression bonding, pressing may be subsequently performed as necessary while cooling is performed, in order to reduce fluidity of the thermoplastic elastomer resin. The pressing pressure may be equal to or lower than the pressure for the heating. The cooling temperature may be, for example, (MP - 80) to (MP - 0)°C with respect to the melting point MP in the heat-molding step.

### Composite material

A composite material according to a first embodiment of the present invention at least includes: a woven fabric containing multifilaments each having a tensile elastic modulus of 20 GPa or higher, as weaving yarns; and a thermoplastic elastomer resin, and
in the composite material, the thermoplastic elastomer resin penetrates through openings of the woven fabric from one surface of the woven fabric, and is exposed at the other surface, and
an exposed area rate of the thermoplastic elastomer resin is from 19 to 100% at the other surface.

A composite material according to a second embodiment of the present invention at least includes: a woven fabric containing monofilaments each having a tensile elastic modulus of 20 GPa or higher, as weaving yarns; and a thermoplastic elastomer resin, and
in the composite material, the woven fabric has a weaving density of 110 yarns/inch or more, and an opening rate of 70% or lower, and
the thermoplastic elastomer resin penetrates through openings of the woven fabric from one surface of the woven fabric, and is exposed at the other surface.

By introducing the thermoplastic elastomer resin into the openings of the woven fabric formed of the high modulus fibers and controlling an area rate of the thermoplastic elastomer resin exposed from the openings at the side opposite to the resin introduction surface side, the thermoplastic elastomer resin on the exposure side exhibits an anchor effect, and integration or heat-adhesiveness of the composite material can be enhanced while the elastic modulus and bending resistance of the woven fabric are maintained.

The composite material may have a tensile elastic modulus of, for example, 5 GPa or higher and preferably 7 GPa or higher. The upper limit thereof is not particularly limited to a specific one, and may be, for example, 25 GPa.

The composite material may have a tensile strength of, for example, 200 MPa or higher, preferably 250 MPa or higher, more preferably 300 MPa or higher, even more preferably 350 MPa or higher, still more preferably 370 MPa or higher, and particularly preferably 400 MPa or higher. The upper limit thereof is not particularly limited to a specific one, and may be, for example, 900 MPa.

The tensile elastic modulus and the tensile strength of the composite material are values measured by the method described in the Examples below.

A thickness of the entire composite material can be selected as appropriate according to the thickness of a further member or the like, and may be, for example, 40 to 3500 µm and preferably 50 to 3000 µm from the viewpoint of thinning.

In the composite material having a further member, in a case where a thickness of a portion other than the further member is evaluated as a thickness of the woven fabric side, the thickness (= thickness from the surface that equally divides, into two, a thickness between an interface of the woven fabric and an interface of the further member, up to the resin-exposed portion) of the woven fabric side may be 20 to 200 µm and preferably 30 to 180 µm. If the thickness of the woven fabric side is excessively small, the composite material is unlikely to have sufficient strength. On the other hand, if the thickness is excessively large, flexibility of the composite material is unlikely to be exhibited, and processing is thus likely to become difficult.

A basis weight of the entire composite material is selected as appropriate according to the basis weight of the woven fabric, and may be, for example, 40 g/m² or more, preferably 60 g/m² or more, and more preferably 80 g/m² or more from the viewpoint of thinning. The upper limit thereof is not particularly limited to a specific one, and may be 400 g/m² or less.

In the composite material having a further member, in a case where the basis weight of a portion other than the further member is evaluated as the basis weight of the woven fabric side, the basis weight (= the total basis weight of the woven fabric portion and the thermoplastic elastomer resin portion introduced into the woven fabric portion) of the woven fabric side may be, for example, 20 g/m² or more, preferably 30 g/m² or more, and more preferably 40 g/m² or more. The upper limit thereof is not particularly limited to a specific one, and may be 200 g/m² or less. The basis weight of the woven fabric side may be measured by separating the composite material of the woven fabric side. In this case, the woven fabric and the further member are usually separated at a surface that equally divides, into two, the thickness between the interface of the woven fabric and the interface of the further member.

In a case where the composite material has a further member, a peeling strength between the woven fabric and the further member may be, for example, 10 N/10 mm or higher, preferably 15 N/10 mm or higher, and more preferably 20 N/I0 mm or higher. The upper limit thereof is not particularly limited to a specific one, and may be, for example, 200 N/10 mm. The peeling strength is a value measured by the method described in the Examples below.

In a case where the fibers each having a tensile elastic modulus of 20 GPa or higher in the composite material are monofilaments, an average single fiber diameter of the fibers may be, for example, 1 to 80 µm, preferably 2 to 50 µm, and more preferably 5 to 40 µm.

In a case where the fibers each having a tensile elastic modulus of 20 GPa or higher in the composite material are multifilaments, an average single fiber diameter of the fibers may be, for example, 20 to 200 µm, preferably 30 to 150 µm, and more preferably 40 to 100 µm.

The average single fiber diameter is a value measured by the method described in the Examples below.

A proportion of the thermoplastic elastomer resin introduced into the woven fabric may be, for example, 20 mass% or more, for example, more than 25 mass%, preferably 30 mass% or more, more preferably 60 mass% or more, and even more preferably 70 mass% or more with respect to the total of the woven fabric and the thermoplastic elastomer resin introduced into the woven fabric.

The thermoplastic elastomer resin introduced into the woven fabric represents the resin that exists on the woven fabric side in the composite material, and can be specifically examined as an amount of the resin that exists on the woven fabric side where the composite material is cut at the one surface (introduction surface) of the woven fabric. The upper limit of the proportion is not particularly limited to a specific one, and may be about 90 mass%.

The proportion of the thermoplastic elastomer resin introduced into the woven fabric may be different depending on whether the woven fabric has monofilaments as the weaving yarns, or has multifilaments as the weaving yarns. The higher the proportion of the thermoplastic elastomer resin is, the more greatly the heat-fusibility and durability of the composite material can be enhanced. On the other hand, if the proportion of the thermoplastic elastomer resin is excessively high, the proportion is disadvantageous from the viewpoint of thinning.

For example, in a case where the woven fabric has monofilaments as the weaving yarns, the proportion of the thermoplastic elastomer resin introduced into the woven fabric may be, for example, 60 mass% or more, preferably 65 mass% or more, and more preferably 70 mass% or more. The upper limit thereof is not particularly limited to a specific one, and may be about 90 mass%.

In a case where the woven fabric has multifilaments as the weaving yarns, the proportion of the thermoplastic elastomer resin introduced into the woven fabric may be, for example, 20 mass% or more, preferably more than 25 mass%, more preferably 30 mass% or more, and even more preferably 70 mass% or more. The upper limit thereof is not particularly limited to a specific one, and may be about 80 mass%.

### EXAMPLES

Hereinafter, the present invention will be described in more detail with reference to Examples. The Examples, however, are not intended to limit the present invention. In the Examples and Comparative Examples below, various physical properties were determined in accordance with the following methods.

### Average Single Fiber Diameter (µm)

By using a scanning electron microscope S-3400N manufactured by Hitachi High-Technologies Corporation, fiber diameters of filaments of yarns on a woven fabric cross-section were measured at ten points to calculate an average value as an average single fiber diameter.

### Fineness (dtex)

A woven fabric constituting a composite material was disassembled to obtain weaving yarns (yarns) of the woven fabric. For the obtained yarn, the yarn fineness was measured in accordance with JIS L 1013. The single fiber fineness was calculated by dividing the yarn fineness by the number of filaments of the yarn.

### Yarn Elastic Modulus

A woven fabric constituting a composite material was disassembled to obtain yarns of the woven fabric. For the obtained yarn, a tensile strength of the yarn was measured as a yarn strength (N), and a yarn elongation was measured in accordance with JIS L 1013. A gradient of a straight line connecting between two points at elongation percentages of 0.25% and 1.00% was calculated according to a strength-elongation curve to determine a tensile elastic modulus as a yarn elastic modulus (GPa).

### Weaving Density

For a woven fabric constituting a composite material, in accordance with the C method of JIS L 1096, each of the number of warp yarns and the number of weft yarns per 5 cm was measured using a stereo microscope, and was converted to the number of yarns per inch to determine as a weaving density (yarns/inch).

### Basis Weight of Woven Fabric

For a woven fabric constituting a composite material, in accordance with the A method of JIS L 1096, two test pieces each having a size of 200 mm × 200 mm were collected, and the mass (g) of each test piece in the standard state was weighed, and converted to a mass per unit area to determine as a basis weight (g/m2).

### Thickness of Woven Fabric

For a woven fabric constituting a composite material, a thickness was measured using a thickness measurement device in accordance with the A method of JIS L 1096.

### Opening Rate

By using a digital microscope VHX-2000 manufactured by KEYENCE CORPORATION or a scanning electron microscope S-3400N manufactured by Hitachi High-Technologies Corporation, an image was taken at such a magnification that 25 to 100 opening portions of a woven fabric were included. The obtained image was binarized by Adobe Photoshop Elements 2021, and an opening rate was calculated by dividing a total area (mm) of the opening portions by a total area (mm) of the image, and indicated as percentage. The measurement was performed according to roughness of interstices such that the weaving density of 100 yarns/inch was set as a reference, and the woven fabric was observed using the microscope when the interstices were rougher than the reference, and the woven fabric was observed using the scanning electron microscope when the interstices were finer than the reference. The same applied to the following measurement.

### Opening Length (Length / Width Ratio)

By using a digital microscope VHX-2000 manufactured by KEYENCE CORPORATION or a scanning electron microscope S-3400N manufactured by Hitachi High-Technologies Corporation, lengths of opening portions were measured in the length direction and the width direction at such a magnification that 9 to 16 opening portions of a woven fabric were included, and each of average values of the opening lengths in the length direction and the width direction was calculated. A length / width ratio of the openings was calculated by dividing the average value of the opening lengths in the length direction by the average value of the opening lengths in the width direction.

### Opening Area/One Opening and Opening Area/inch²]

By using a digital microscope VHX-2000 manufactured by KEYENCE CORPORATION or a scanning electron microscope S-3400N manufactured by Hitachi High-Technologies Corporation, lengths of opening portions were measured in the longitudinal direction and the transverse direction at such a magnification that 9 to 16 opening portions of a woven fabric were included, and each of average values of the opening lengths in the length direction and the width direction was calculated. A product of the average values was calculated as an opening area/one opening, and a product of the number of the opening portions and the opening area/one opening was calculated as an opening area per square inch.

### Elastomer MFR g/10 min

By using a melt indexer L244 manufactured by Takara Kogyo Kabushiki Kaisha, a flow rate of a resin extruded from an orifice diameter of 2.1 mm at 190°C and 2.16 kgf, was measured in accordance with JIS K 2101.

### Elastomer Melting Point

In accordance with JIS K 7121 test method, a melting point (°C) was determined as a main endothermic peak temperature observed in measurement using a differential scanning calorimeter (DSC; "TA3000" manufactured by Mettler-Toledo International Inc.). Specifically, a melting point was determined as an endothermic peak that occurred when a sample (10 to 20 mg) introduced to an aluminum pan in the DSC device was subjected to a temperature increase at an elevation rate of 20°C/min from 25°C with supplying nitrogen as a carrier gas at a flow rate of 100 mL/min.

### Thickness of Composite Material

For a composite material, a thickness was measured by a thickness measurement device in accordance with the A method of JIS L I096.

In the composite material, two woven fabrics were substantially adhered to each other. Therefore, a thickness (= thickness from a surface equally dividing, into two, a thickness between an interface of the woven fabric and an interface of a further member, up to a resin exposed portion) of a woven fabric side, was evaluated as a thickness obtained by equally dividing the thickness of the entire composite material, into two, for convenience sake.

The thickness of the woven fabric side may be measured using a photomicrograph of the cross-section of the composite material.

### Basis Weight of Composite Material

For a composite material, in accordance with the A method of JIS L 1096, two test pieces each having a size of 200 mm×200 mm were collected, and the mass (g) of each test piece in the standard state was weighed, and converted to a mass per unit area to determine as a basis weight (g/m²).

In the composite material, two woven fabrics were substantially adhered to each other. Therefore, a basis weight (= a total basis weight of a woven fabric portion and a thermoplastic elastomer resin portion introduced into the woven fabric portion) of the woven fabric side was evaluated as the basis weight obtained by equally dividing the basis weight of the entire composite material, into two, for convenience sake.

The basis weight of the woven fabric side may be measured by separating the composite material on the woven fabric side.

### Composite Material Exposed Area Rate

By using a digital microscope VHX-2000 manufactured by KEYENCE CORPORATION or a scanning electron microscope S-3400N manufactured by Hitachi High-Technologies Corporation, an image was taken at such a magnification that a resin (anchor) was exposed from opening portions of a woven fabric at 25 to 100 positions. The exposed resin (anchor) and the woven fabric were binarized by Adobe Photoshop Elements 2021, and an exposed area rate was calculated by dividing a total area of the exposed resin (anchor) portions by a total area of the image, and indicated as percentage.

### Composite Material Tensile Elastic Modulus, Tensile Strength

For a composite material, in accordance with the A method of JIS L 1096, three test pieces each having a width of 20 mm and a length of 200 mm were collected, and measured at a grip interval of 100 mm and a tensile speed of 300 mm/min, and an average value was calculated.

### Composite Material Peeling Strength (N/10 mm)

For a composite material, with reference to JIS K 6256-1, three test pieces each having a width of 10 mm and a length of 200 mm were collected, a width of a gripping part was set to about 50 mm, and a 180° peeling test body was obtained by peeling a woven fabric and a woven fabric at an interface. The moving speed of a gripping tool was 50 mm/min in the measurement. In each of the three test pieces, an average value of the five largest values and the five lowest values of all peaks at the 80% center portion except for the first and the last 10% portions was determined as a peeling strength.

### Example 1

### Production of Woven Fabric

(1) A wholly aromatic polyester polymer containing the structural units (A) and (B) shown in the above formulae at a molar ratio of (A)/(B) = 73/27 was used. The physical properties of the polymer were ηinh = 4.6 dl/g and a melting point Mp = 280°C. The polymer was spun using a general melt-spinning machine with a spinneret with 20 holes to give a multifilament of 110 dtex/20 filaments. The multifilament was heat-treated in a nitrogen atmosphere at 280°C for 20 hours to obtain a wholly aromatic polyester polymer filament (strength of 23 cN/dtex).
(2) By using the multifilament, a plain woven fabric of the wholly aromatic polyester fiber in which the weft density was 50 yarns/inch and the warp density was 50 yarns/inch was produced. The woven fabric had a basis weight of 45.9 g/m² and a thickness of 103 µm.

### Production of Composite Material

(3) The woven fabric was cut into two test pieces each having a size of 200 mm × 200 mm, the two woven fabrics were stacked with a thermoplastic elastomer resin sheet (Ecellent SHM102 manufactured by Sheedom Co., Ltd., basis weight of 80.5 g/m², thickness of 70 µm) having the same size as the test piece so that the thermoplastic elastomer resin sheet was sandwiched between the woven fabrics. The stacked product was held between a pair of release sheets. In this state, the obtained product was pressed for five minutes at a pressure of 2 MPa by a hot-press molding machine having been preheated at a temperature of 120°C, and thereafter, was further pressed for five minutes at a pressure of 0.5 MPa by water-cooling type cold pressing to obtain a composite material formed of a composite of one of the woven fabrics, the thermoplastic elastomer resin sheet, and the other of the woven fabrics as a further member.

In the composite material, the two woven fabrics were substantially used. Therefore, a value obtained by dividing an amount of the resin in the composite material by two was set as a value of an amount of the thermoplastic elastomer resin introduced into the woven fabric for convenience sake, and a resin ratio was calculated as the resin ratio = the resin introduced into the woven fabric / (the woven fabric + the resin introduced into the woven fabric) × 100.

### Example 2

The spinneret was changed into a spinneret with 10 holes to give a multifilament of 56 dtex/10 filaments. The multifilament was heat-treated in a nitrogen atmosphere at 280°C for 20 hours to obtain a wholly aromatic polyester polymer filament (strength of 23 cN/dtex).

The composite material was produced in the same manner as in Example 1 except that a plain woven fabric of the wholly aromatic polyester fiber in which the weft density was 110 yarns/inch and the warp density was 110 yarns/inch was produced by using the multifilament, and the obtained composite material was evaluated.

### Example 3

The composite material was produced in the same manner as in Example 1 except that the plain woven fabric of Example 1 was subjected to be passed through a heat calender roll (mirror surface) at a temperature of 170°C by a weight of the roll itself as a pressure, and the obtained composite material was evaluated.

### Example 4

The composite material was produced in the same manner as in Example 1 except that the plain woven fabric of the wholly aromatic polyester fiber of Example 1 was subjected to be passed through a heat calender roll (mirror surface) at a temperature of 170°C at a roll pressure of 0.05 MPa, and the obtained composite material was evaluated.

### Example 5

The composite material was produced in the same manner as in Example 4 except that PU resin was impregnated into the plain woven fabric of the wholly aromatic polyester fiber of Example 1 to obtain an impregnated woven fabric, and then the impregnated woven fabric was subjected to be passed through a heat calender roll (mirror surface) at a temperature of 170°C at a roll pressure of 0.05 MPa, and the obtained composite material was evaluated.

### Example 6

(1) A wholly aromatic polyester polymer containing the structural units (A) and (B) shown in the above formulae at a molar ratio of (A)/(B) = 73/27 was used. The physical properties of the polymer were ηinh = 4.6 dl/g and a melting point Mp = 280°C. The polymer was spun using a general melt-spinning machine with a spinneret with 40 holes to give a multifilament of 220 dtex/40 filaments. The multifilament was heat-treated in a nitrogen atmosphere at 280°C for 20 hours to obtain a wholly aromatic polyester polymer filament (strength of 23 cN/dtex).
(2) By using the multifilament, a plain woven fabric of the wholly aromatic polyester fiber in which the weft density was 35 yarns/inch and the warp density was 35 yarns/inch was produced. The woven fabric had a basis weight of 62 g/m² and a thickness of 113 µm.
(3) The woven fabric was cut into two test pieces each having a size of 200 mm × 200 mm, the two woven fabrics were stacked with a thermoplastic elastomer resin sheet (Ecellent SHM102 manufactured by Sheedom Co., Ltd., basis weight of 80.5 g/m², thickness of 70 µm) having the same size as the test piece so that the thermoplastic elastomer resin sheet was sandwiched between the woven fabrics. The stacked product was held between a pair of release sheets. In this state, the obtained product was heated for five minutes by a hot-press molding machine having been preheated at a temperature of 120°C in a state where no pressure was applied (0 MPa), and was thereafter left as it was at room temperature to obtain a composite material formed of a composite of one of the woven fabrics, the thermoplastic elastomer resin sheet, and the other of the woven fabrics as a further member.

### Example 7

The woven fabric obtained in Example 6 was cut into two test pieces each having a size of 200 mm × 200 mm, the two woven fabrics were stacked with a thermoplastic elastomer resin sheet (Ecellent SHM102 manufactured by Sheedom Co., Ltd., basis weight of 80.5 g/m², thickness of 70 µm) having the same size as the test piece so that the thermoplastic elastomer resin sheet was sandwiched between the woven fabrics. The stacked product was held between a pair of release sheets. In this state, the obtained product was pressed for five minutes at a pressure of 0.1 MPa by a hot-press molding machine having been preheated at a temperature of 120°C, and thereafter, was further pressed for five minutes at a pressure of 0.1 MPa by water-cooling type cold pressing to obtain a composite material formed of a composite of one of the woven fabrics, the thermoplastic elastomer resin sheet, and the other of the woven fabrics as a further member.

### Example 8

(1) A wholly aromatic polyester polymer containing the structural units (A) and (B) shown in the above formulae at a molar ratio of (A)/(B) = 73/27 was used. The physical properties of the polymer were ηinh = 4.6 dl/g and a melting point Mp = 280°C. The polymer was spun using a general melt-spinning machine with a spinneret with 300 holes to give a multifilament of 1670 dtex/300 filaments. The multifilament was heat-treated in a nitrogen atmosphere at 280°C for 20 hours to obtain a wholly aromatic polyester polymer filament (strength of 23 cN/dtex).
(2) By using the multifilament, a plain woven fabric of the wholly aromatic polyester fiber in which the weft density was 13 yarns/inch and the warp density was 13 yarns/inch was produced. The woven fabric had a basis weight of 161.6 g/m² and a thickness of 175 µm.
(3) The woven fabric was cut into two test pieces each having a size of 200 mm × 200 mm, the two woven fabrics were stacked with a thermoplastic elastomer resin sheet (Ecellent SHM102 manufactured by Sheedom Co., Ltd., basis weight of 80.5 g/m², thickness of 70 µm) having the same size as the test piece so that the thermoplastic elastomer resin sheet was sandwiched between the woven fabrics. The stacked product was held between a pair of release sheets. In this state, the obtained product was pressed for five minutes at a pressure of 2 MPa by a hot-press molding machine having been preheated at a temperature of 120°C, and thereafter, was further pressed for five minutes at a pressure of 0.5 MPa by water-cooling type cold pressing to obtain a composite material formed of a composite of one of the woven fabrics, the thermoplastic elastomer resin sheet, and the other of the woven fabrics as a further member.

### Example 9

The composite material was produced in the same manner as in Example 1 except that a plain woven fabric having a mesh structure in which the warp density was 200 yarns/inch was produced by using hybrid core-sheath composite monofilaments, and the obtained composite material was evaluated.

The hybrid core-sheath composite fiber was produced by the following method.

As a liquid crystal polyester for forming a core component and an island component in a sheath component, melt-anisotropic aromatic polyester [melting point (Ma): 278°C, melt viscosity (MVa): 32.1 Pa·s] containing structural units (P: HBA) and (Q: HNA) at a molar ratio of 73/27 was used. As a flexible thermoplastic resin for forming a sea component in the sheath component, PEN [melting point (Mb): 266.3°C, melt viscosity (MVb): 100 Pa·s] was used. These polymers were spun at a spinning temperature of 310°C to give a monofilament having a fineness of 30 dtex. A proportion of the island component in the sheath component was 30 wt%, and a ratio of the sheath component was 0.35 (65/35 as a core-sheath ratio (weight ratio)). The monofilament was heat-treated in a nitrogen atmosphere at 260°C for 18 hours to obtain a hybrid composite fiber (strength of 18 cN/dtex).

### Example 10

The composite material was produced in the same manner as in Example 9 except that a plain woven fabric having a mesh structure in which the weft density was 200 yarns/inch and the warp density was 200 yarns/inch was produced by using the composite monofilaments of Example 9, and the obtained composite material was evaluated.

### Example 11

The composite material was produced in the same manner as in Example 9 except that a plain woven fabric having a mesh structure in which the weft density was 150 yarns/inch and the warp density was 150 yarns/inch was produced by using the composite monofilaments of Example 9, and the obtained composite material was evaluated.

### Comparative example 1

The composite material was produced in the same manner as in Example 1 except that the plain woven fabric of Example 2 was subjected to be passed through a heat calender roll (mirror surface) at a temperature of 170°C at a roll pressure of 0.05 MPa to obtain a woven fabric having a low opening rate, and the obtained composite material was evaluated.

### Comparative example 2

The composite material was produced in the same manner as in Example 1 except that a thermoplastic-resin-containing composition containing a polyurethane resin and a solvent was applied to the plain woven fabric of Example 2 to produce two dried woven fabrics having the resin applied thereto, and the resin-applied surfaces of the two woven fabrics were stacked with each other without using a thermoplastic elastomer resin sheet, and the obtained composite material was evaluated.

### Comparative example 3

The woven fabric obtained in Example 6 was cut into two test pieces each having a size of 200 mm × 200 mm, the two woven fabrics were stacked with a thermoplastic elastomer resin sheet (Ecellent SHM102 manufactured by Sheedom Co., Ltd., basis weight of 80.5 g/m², thickness of 70 µm) having the same size as the test piece so that the thermoplastic elastomer resin sheet was sandwiched between the woven fabrics. The stacked product was held between a pair of release sheets. In this state, the obtained product was pressed for five minutes at a pressure of 2 MPa by a hot-press molding machine having been set to 20°C, and thereafter, was further pressed for five minutes at a pressure of 0.1 MPa by water-cooling type cold pressing to obtain a composite material formed of a composite of one of the woven fabrics, the thermoplastic elastomer resin sheet, and the other of the woven fabrics as a further member.

### Comparative example 4

The composite material was produced in the same manner as in Example 1 except that a plain woven fabric (SMARTMESH-P Product No. 79/200-48 manufactured by Nippon Tokushu Fabric Inc.) having a mesh structure in which the warp density was 200 yarns/inch was used as a woven fabric formed of PET monofilaments, and the obtained composite material was evaluated. The woven fabric had a basis weight of 47.2 g/m² and a thickness of 70 µm.

### Comparative example 5

The composite material was produced in the same manner as in Example 9 except that a plain woven fabric having a weft density of 100 yarns/inch and a warp density of 100 yarns/inch was produced by using the composite monofilaments of Example 9, and the obtained composite material was evaluated.

Tables 5 and 6 indicate the physical properties of the obtained composite materials.

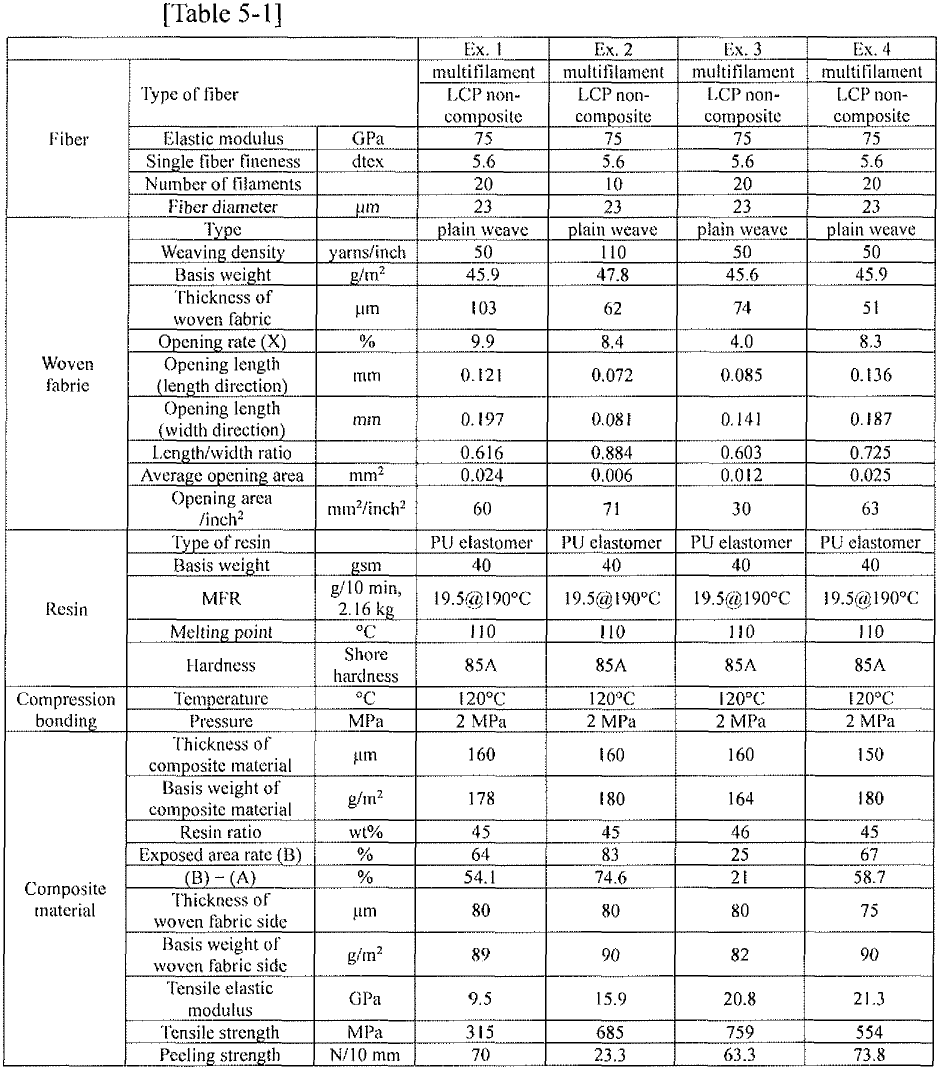

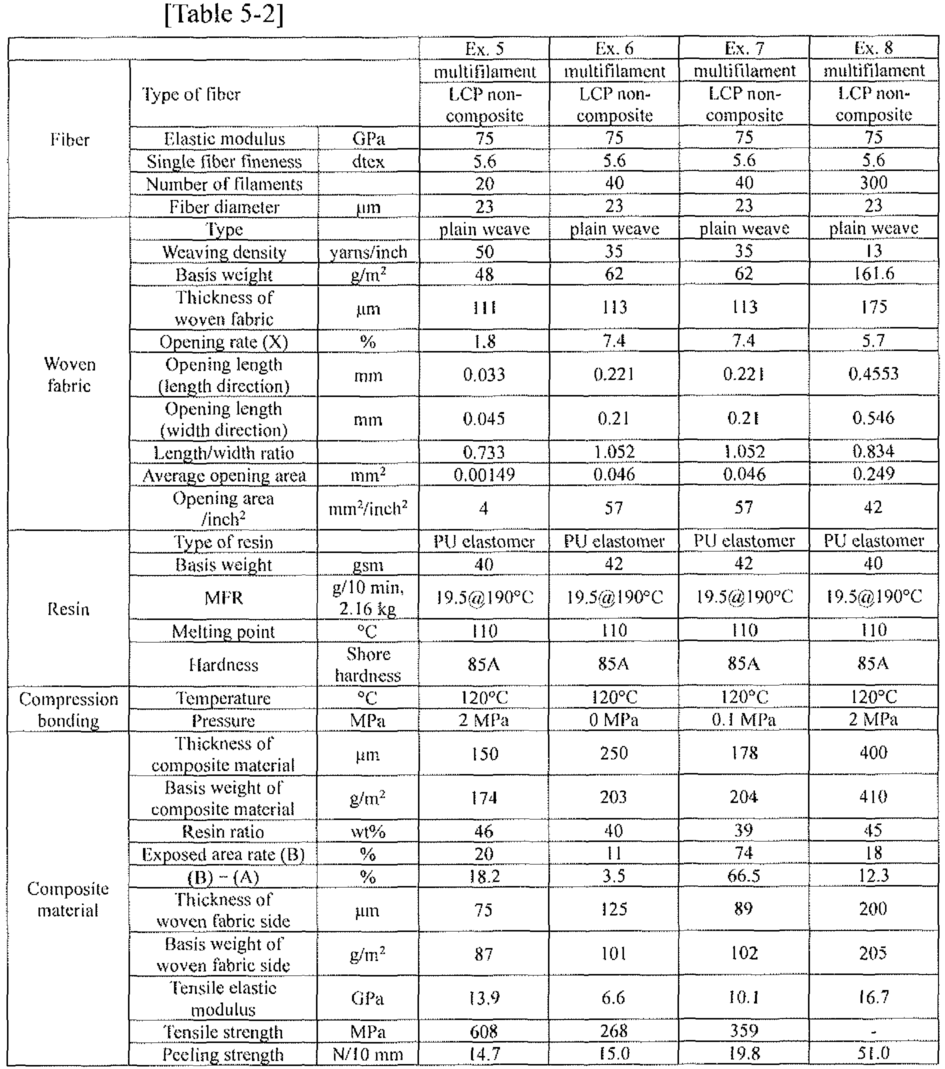

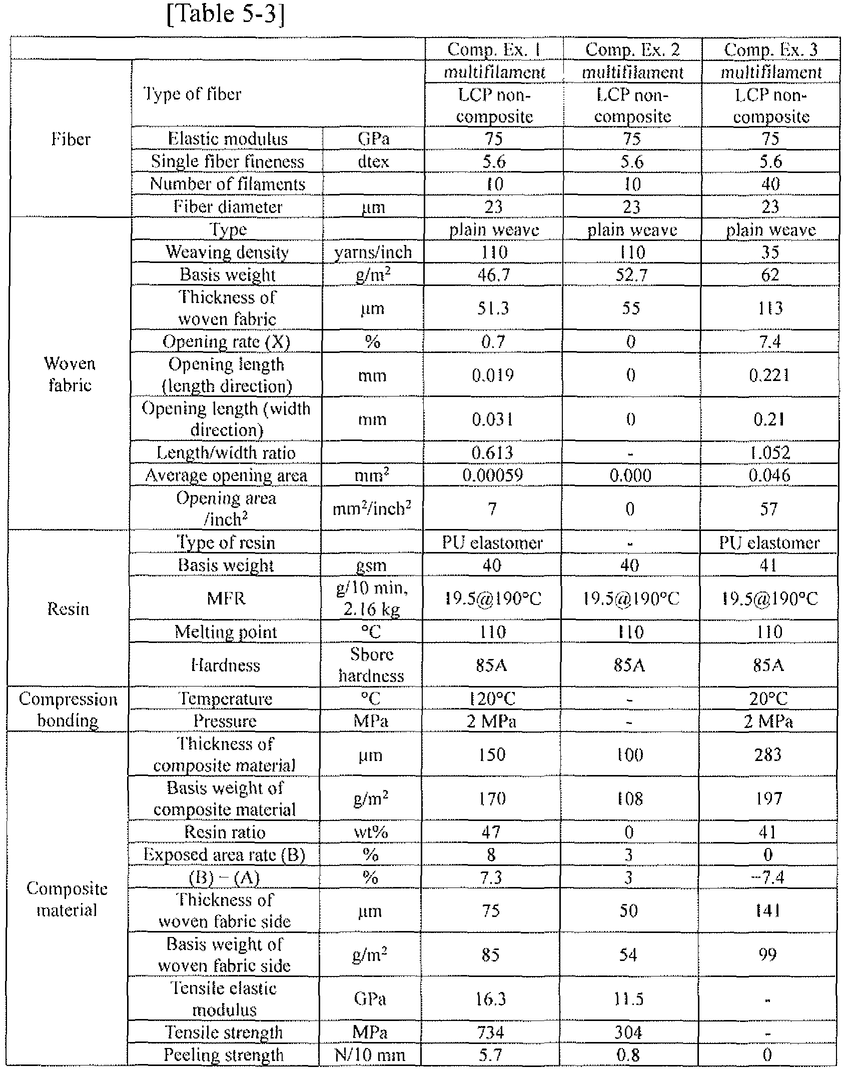

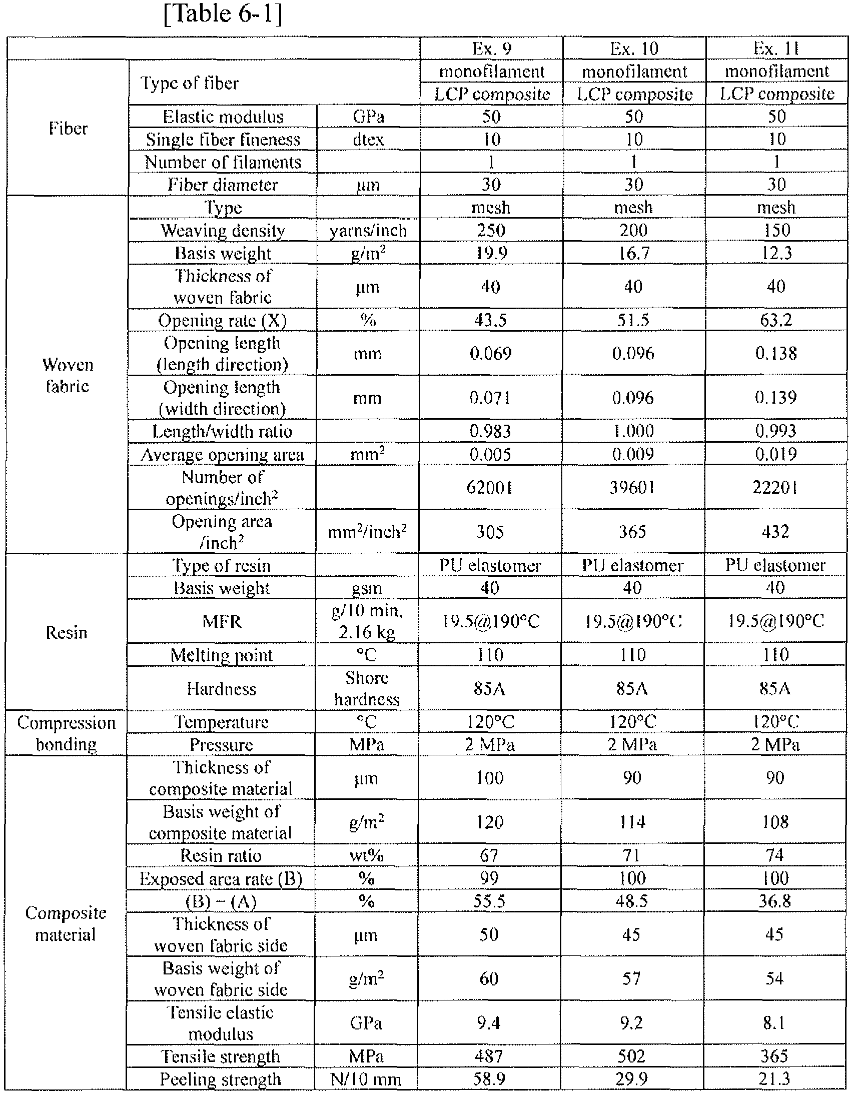

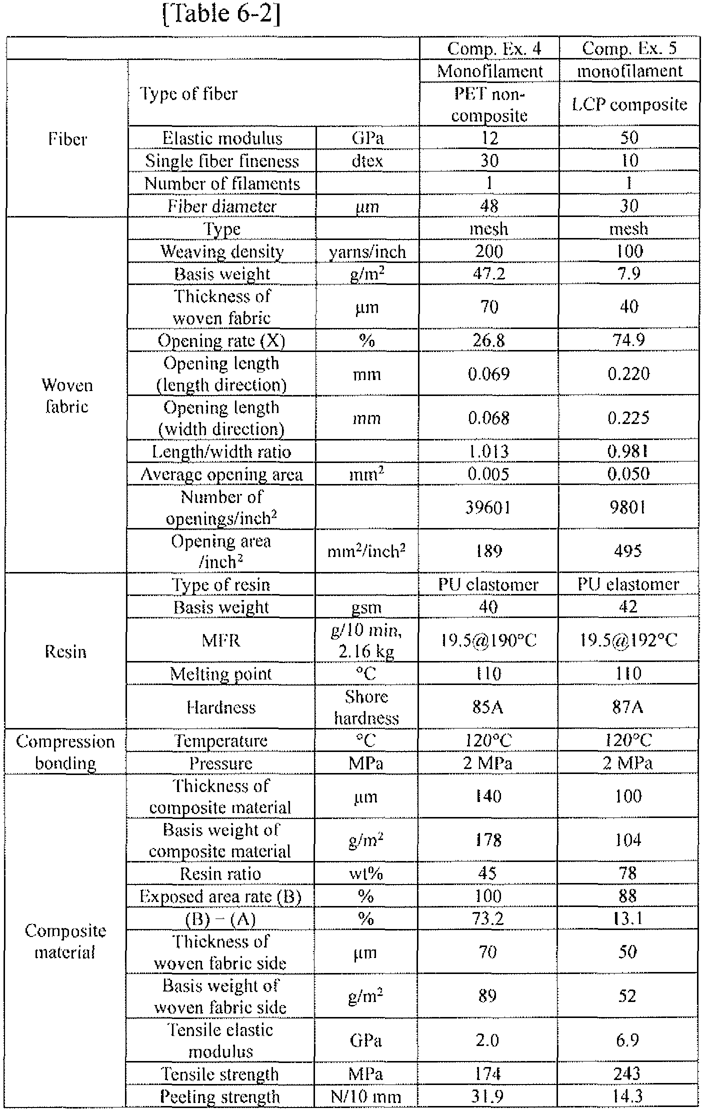

As indicated in Table 5, in Comparative Examples 1 and 2 in which the multifilaments were used as the weaving yarns, the area over which the resin was exposed was small, and thus, the anchor effect was not able to be exhibited, and the peeling strength was low.

On the other hand, in Examples 1 to 8 in which the multi filaments were used as the weaving yarns, the area over which the resin was exposed was large, and thus, the peeling strength was high and adhesiveness to a further member was good, as compared with Comparative Examples 1 and 2. In Comparative Example 3, the thermoplastic elastomer resin was not exposed, and therefore, adhesiveness to a further member was not obtained.

As indicated in Table 6, in Comparative Example 4 in which the monofilaments were used as the weaving yarns, the opening rate was low and the weaving density was high, and therefore, adhesiveness to a further member was good but the elastic modulus was small since the weaving yarns were PET monofilaments. As a result, the tensile elastic modulus and the tensile strength of the composite material were low. In Comparative Example 5 in which the monofilaments were used as the weaving yarn, the weaving density was low and the opening rate was excessively high, and therefore, integration with the resin was reduced and the peeling strength was low.

On the other hand, in Examples 9 to 11 in which the monofilaments were used as the weaving yarns, the composite material exhibited high tensile elastic modulus and tensile strength as compared with Comparative Example 5, and had high peeling strength and good adhesiveness to a further member as compared with Comparative Example 5.

### INDUSTRIAL APPLICABILITY

The composite material of the present invention has excellent integration properties, and thus, can be suitably used as reinforcements such as flexible circuit boards of electric and electronic devices, electronic device casings, smartphone covers, internal members, various arms, various frames, various hinge portions and thin portions (power cable insertion portion), and, in addition thereto, reinforcements of wearable products such as smart watches, smart wears, and head-mounted displays, robots, assist suits, and the like.

Preferred embodiments of the present invention have been described as above. However, various additions, modifications, or deletions can be made without departing from the gist of the present invention, and such additions, modifications, and deletions are also included in the scope of the present invention.

## Claims

1. A composite material at least comprising:
a woven fabric which contains weaving yarns being multi filaments each having a tensile elastic modulus of 20 GPa or higher; and
a thermoplastic elastomer resin,
wherein the thermoplastic elastomer resin penetrates through openings of the woven fabric from one surface of the woven fabric, and is exposed at another surface, and
an exposed area rate of the thermoplastic elastomer resin is 10% or higher at the other surface.

2. The composite material according to claim 1, wherein the woven fabric has an opening area per square inch of 3 mm²/inch² or more.

3. A composite material at least comprising:
a woven fabric which contains weaving yarns being monofilaments each having a tensile elastic modulus of 20 GPa or higher; and
a thermoplastic elastomer resin,
wherein the woven fabric has a weaving density of 110 yarns/inch or more and an opening rate of 70% or less, and
the thermoplastic elastomer resin penetrates through openings of the woven fabric from one surface of the woven fabric, and is exposed at another surface.

4. The composite material according to claim 3, wherein the woven fabric has an opening area per square inch of 200 mm²/inch² or more.

5. The composite material according to any one of claims 1 to 4, wherein a proportion of the thermoplastic elastomer resin introduced into the woven fabric is 20 mass% or more.

6. The composite material according to any one of claims 1 to 5, wherein the weaving yarns each having the tensile elastic modulus of 20 GPa or higher are thermotropic liquid crystal wholly aromatic polyester fibers.

7. The composite material according to any one of claims 1 to 6, wherein the weaving yarns each having the tensile elastic modulus of 20 GPa or higher are composite fibers.

8. The composite material according to any one of claims 1 to 7, wherein each of the openings has a length / width ratio of from 0.5 to 2.

9. The composite material according to any one of claims 1 to 8, wherein the thermoplastic elastomer resin penetrates through the openings of the woven fabric from the one surface of the woven fabric, and is spread from the openings to surrounding area and exposed at the other surface, and the openings have an average opening area of 0.0010 mm² or more.

10. The composite material according to any one of claims 1 to 9, comprising a further member, wherein the further member and the woven fabric are bonded with the thermoplastic elastomer resin.

11. The composite material according to any one of claims 1 to 10, wherein the composite material is used as a reinforcement.

12. A method for manufacturing the composite material as recited in any one of claims 1 to 11, the method comprising:
stacking a woven fabric, a thermoplastic elastomer resin sheet, and, as necessary, a further member in order, the woven fabric having openings and containing weaving yarns being fibers each having a tensile elastic modulus of 20 GPa or higher; and
softening the thermoplastic elastomer resin sheet while heating to press out a thermoplastic elastomer resin of the thermoplastic elastomer resin sheet from one surface of the woven fabric into the openings of the woven fabric.

13. The manufacturing method according to claim 12, wherein the thermoplastic elastomer resin sheet has an MFR of 0.3 to 80 g/10 min.

14. The manufacturing method according to claim 12 or 13, wherein the thermoplastic elastomer resin sheet has a thickness of 10 to 200 µm.
